# DEMANDE DE BREVET EUROPEEN

(11) **EP 4 489 235 A2**
(43) Date de publication de la demande: **08.01.2025**
(21) Numéro de dépôt: 24186536.9
(22) Date de dépôt: 04.07.2024
(51) Int. Cl.: H01S 5/026, B23K 26/067

(54) **COMMUTATION OPTIQUE ET DISTRIBUTION SPATIALE SÉQUENTIELLE D'UN FAISCEAU LASER DE PUISSANCE EN MODE IMPULSIONNEL AVEC ASSERVISSEMENT DÉTERMINISTE**

(30) Priorité: 06.07.2023 FR 2307211
(71) Demandeur: Commissariat à l'Energie Atomique et aux Energies Alternatives, 75015 Paris (FR)
(72) Inventeur: MAGNE, Sylvain, 91191 Gif-sur-Yvette Cedex (FR); SANNIE, Guillaume, 91191 Gif-sur-Yvette Cedex (FR); GOBERT, Olivier, 91191 Gif-sur-Yvette Cedex (FR); MENNERAT, Gabriel, 91191 Gif-sur-Yvette Cedex (FR)
(74) Mandataire: Brevalex

(57) **Abrégé**

L'invention porte sur un système laser 1 adapté à émettre un faisceau laser de puissance F_{L}, impulsionnel, et à le distribuer suivant plusieurs directions de renvoi successives, comportant :
∘ un dispositif laser de puissance 10 ;
∘ un dispositif de renvoi 20 adapté à réfléchir et distribuer le faisceau laser de puissance F_{L} suivant les directions de renvoi successives, et comportant au moins un miroir de renvoi ; et
∘ un dispositif d'asservissement (30) adapté à fournir un signal de déclenchement s_{d}(t) à un sélecteur d'impulsion (12) autorisant la transmission du faisceau laser de puissance F_{L} qui est alors reçu par le miroir de renvoi (21ⱼ) en une position référence P_{mr,ref.i} qui le réfléchi suivant la direction de renvoi (D_{r,i}) correspondante.

## Description

### DOMAINE TECHNIQUE

Le domaine de l'invention est celui des systèmes laser de puissance adaptés à émettre un faisceau laser impulsionnel de puissance, et à le distribuer suivant plusieurs directions de renvoi successives.

### ÉTAT DE LA TECHNIQUE ANTÉRIEURE

Il existe des systèmes laser qui permettent d'émettre un faisceau laser impulsionnel de puissance à partir d'une même source laser, puis de le distribuer séquentiellement suivant plusieurs directions de renvoi successives. De tels systèmes laser peuvent être utilisés pour différentes applications, par exemple dans le cadre de la radiographie 3D, du marquage de produits, du traitement de substrats, entre autres.

Ces systèmes laser comportent habituellement un dispositif laser de puissance émettant un faisceau laser impulsionnel, et un dispositif de renvoi, de type optomécanique, adapté à réfléchir le faisceau laser de puissance suivant différentes directions de renvoi successives. Le dispositif de renvoi comporte au moins un miroir de renvoi, et un dispositif mécanique de positionnement auquel le miroir de renvoi est assemblé. Ce dispositif de renvoi est adapté à positionner le miroir de renvoi, à une fréquence de renvoi donnée, en plusieurs positions références successives associées respectivement aux directions de renvoi voulues. Ainsi, lorsque le miroir de renvoi est positionné en une position référence, il reçoit le faisceau laser de puissance et le réfléchit suivant la direction de renvoi correspondante.

A titre d'exemple, le document FR2608786A1 décrit un système laser comportant un dispositif laser émettant un faisceau laser impulsionnel de puissance en direction d'un dispositif de renvoi. Celui-ci comporte un miroir de renvoi monté sur un support rotatif, ici sur l'axe d'un galvanomètre dont l'orientation est contrôlée par un ordinateur. Dans cet exemple, le faisceau laser de puissance est distribué successivement en direction de différentes fibres optiques.

Le document US2005/0087295A1 décrit également un exemple d'un système laser comportant un dispositif laser émettant un faisceau laser impulsionnel de puissance en direction d'un dispositif de renvoi. Ici, le dispositif de renvoi comporte une structure polygonale rotative (formée de plusieurs facettes réflectrices). La rotation de ce miroir polygonal permet de distribuer le faisceau laser de puissance suivant plusieurs directions successives. Dans ce document, l'objectif est de distribuer le faisceau laser de puissance sur différentes zones de la surface d'un substrat dans le but de le perforer.

Cependant, dans ces exemples, le système laser n'est pas en mesure d'assurer une synchronisation effective entre l'émission des impulsions laser de puissance et la position angulaire du miroir de renvoi, de sorte que de tels systèmes laser ne peuvent présenter de bonnes performances en termes de précisions spatiale et/ou angulaire de renvoi, en particulier à des cadences laser élevées, par exemple de l'ordre de quelques kilohertz. La précision angulaire de renvoi peut être définie comme étant l'écart angulaire entre la direction de renvoi effective par rapport à la direction de renvoi voulue, et la précision spatiale de renvoi est définie comme étant l'écart spatial entre la position effective du spot laser à une distance prédéfinie et sa position voulue.

Notons qu'il existe également des systèmes laser permettant de contrôler la direction de renvoi du faisceau laser de puissance. Les documents EP0390662A1 et WO93/06641A1 décrivent des exemples de tels systèmes laser. Cependant, ces systèmes laser ne sont pas configurés pour distribuer le faisceau laser de puissance suivant plusieurs directions successives à une cadence laser élevée. De plus, la direction de renvoi du faisceau laser de puissance ne dépend pas de la position d'un miroir mobile, mais résulte de la déflexion acousto-optique du faisceau laser d'injection (de faible puissance).

Notons enfin qu'il existe des commutateurs optiques fonctionnant sur le principe des miroirs insérables. Les faisceaux optiques sont alors redirigés par insertion successives de miroirs insérables par translation, comme décrit par exemple dans le document US2002/0126948A1. Appliquée à la commutation kilohertz de faisceaux laser de puissance de gros diamètres (e.g. 40 mm), cette technique implique l'usage d'actionneurs volumineux, coûteux, qui consomment beaucoup d'énergie, et sont susceptibles de générer des chocs et vibrations. De plus, ce type de commutateur nécessite de remettre tous les miroirs en place pour effectuer un nouveau cycle de lecture. Cette technique de commutation (généralement à base de MEMS) est utilisée en télécommunication optique mais n'est pas adaptée à une commutation de faisceaux de puissance.

### EXPOSÉ DE L'INVENTION

L'invention a pour objectif de remédier au moins en partie aux inconvénients de l'art antérieur, et plus particulièrement de proposer un système laser adapté à émettre un faisceau laser impulsionnel de puissance F_{L}, et à le distribuer suivant plusieurs directions de renvoi successives, avec de bonnes performances en termes de précision angulaire de renvoi Δθᵣ et/ou de précision spatiale de renvoi ΔDᵣ, avec des cadences laser f_{L} pouvant être élevées.

Pour cela, l'objet de l'invention est un système laser adapté à émettre un faisceau laser de puissance F_{L}, impulsionnel, et à le distribuer suivant plusieurs directions de renvoi successives {D_{r,i}}ᵢ₌₁ ; _{NDr}, avec N_{Dr}>1, comportant :
- un dispositif laser de puissance, adapté à émettre le faisceau laser de puissance F_{L} à une cadence laser f_{L};
- un dispositif de renvoi, adapté à réfléchir et distribuer le faisceau laser de puissance F_{L} suivant les directions de renvoi successives {D_{r,i}}, comportant : au moins un miroir de renvoi {21ⱼ}_{j=1 ;Nmr} avec Nₘᵣ≥1 ; et un premier dispositif mécanique de positionnement, auquel le ou les miroirs de renvoi {21ⱼ} sont assemblés, adapté à déplacer continûment le ou les miroirs de renvoi {21ⱼ} pour le ou les positionner successivement, à une fréquence de renvoi fᵣ, en des positions référence {P_{mr,ref,i}}_{i=1 ; NDr} associées respectivement aux directions de renvoi {D_{r,i}}, de sorte qu'un miroir de renvoi positionné en une position référence reçoit le faisceau laser de puissance F_{L} et le réfléchit suivant la direction de renvoi correspondante.

Selon l'invention, le dispositif laser de puissance comporte un sélecteur d'impulsion, adapté à transmettre, à la cadence laser f_{L}, un faisceau laser impulsionnel F₀ incident, le faisceau laser transmis étant destiné à former le faisceau laser de puissance F_{L}.

De plus, le système laser comporte un dispositif d'asservissement, adapté à fournir un signal de déclenchement s_{d}(t) au sélecteur d'impulsion autorisant la transmission du faisceau laser de puissance F_{L}, comportant :
- une source laser de contrôle, adaptée à émettre un faisceau laser de contrôle F_{c} ;
- un dispositif de contrôle, comportant : au moins un miroir de contrôle {41ₖ}_{k=1 ; Nmc} avec N_{mc}≥1 ; et un deuxième dispositif mécanique de positionnement, auquel le ou les miroirs de contrôle {41ₖ} sont assemblés, adapté à déplacer continûment en rotation le ou les miroirs de contrôle {41ₖ} pour le ou les positionner successivement, à la fréquence de renvoi fᵣ, en au moins une position seuil {P_{mc,th,m}}_{m=1 ;Npth}, avec Nₚₜₕ≥1, de sorte qu'un miroir de contrôle positionné en une position seuil reçoit le faisceau laser de contrôle F_{c} et le réfléchit suivant une même direction seuil de retour prédéfinie ;
- un photodétecteur matriciel, adapté à recevoir le faisceau laser de contrôle F_{c} réfléchi par un miroir de contrôle en cours de rotation, et à émettre en réponse un signal de détection s_{pd}(t), représentatif du déplacement du miroir de contrôle, passant par une valeur seuil associée à la ou les positions seuil {P_{mc,th,m}} ;
- un dispositif électronique de déclenchement, adapté à émettre le signal de déclenchement s_{d}(t) lorsque le signal de détection s_{pd}(t) atteint ladite valeur seuil s_{pd,th}, la ou les positions seuil {P_{mc,th,m}} étant prédéfinies de sorte que le faisceau laser de puissance F_{L}, transmis par le sélecteur d'impulsion en réponse au signal de déclenchement s_{d}(t), est reçu par un miroir de renvoi en une position référence P_{mr,ref.i} (i.e. alors qu'il occupe la position référence P_{mr,ref.i}), et donc réfléchi suivant la direction de renvoi correspondante.

Certains aspects préférés mais non limitatifs de ce système laser sont les suivants.

Le dispositif laser de puissance peut comporter une source laser d'injection à blocage de modes passif, adapté à générer le faisceau laser impulsionnel F₀.

Le dispositif électronique de déclenchement peut comporter : un circuit électronique inhibiteur d'impulsions multiples adapté à émettre le signal de déclenchement s_{d}(t) lorsque le signal de détection s_{pd}(t) atteint ladite valeur seuil s_{pd,th} ; et un générateur de retard adapté à transmettre le signal de déclenchement s_{d}(t) au sélecteur d'impulsion, avec un retard prédéfini de sorte que le signal de déclenchement s_{d}(t) est reçu par le sélecteur d'impulsion en phase avec une impulsion laser du faisceau laser impulsionnel F₀ à sélectionner.

Le dispositif laser de puissance peut comporter : un amplificateur optique, situé en aval du sélecteur d'impulsion, et comprenant un amplificateur régénératif pompé de manière impulsionnelle.

Le dispositif d'asservissement peut comporter un circuit optoélectronique d'asservissement du gain, adapté à émettre un signal de pompage sₚ(t) autorisant une transmission d'une impulsion de pompage à l'amplificateur régénératif, de sorte que l'impulsion de pompage est reçue par l'amplificateur régénératif en avance de phase à la réception par celle-ci d'une impulsion laser transmise par le sélecteur d'impulsion en réponse au signal de déclenchement s_{d}(t), avec une avance prédéfinie de sorte que l'amplificateur régénératif présente un gain optimal lorsqu'il reçoit l'impulsion laser transmise par le sélecteur d'impulsion.

La cadence laser f_{L} peut être égale à la fréquence de renvoi fᵣ.

La direction seuil de retour peut être coaxiale avec un axe optique du faisceau laser de contrôle F_{c} alors incident sur le miroir de contrôle {41ⱼ} et provenant de la source laser de contrôle.

Le dispositif de renvoi peut comporter plusieurs miroirs de renvoi {21ⱼ}, avec Nₘᵣ>1, assemblés à un premier support rotatif, lequel est un cylindre à section circulaire ou polygonale, à la surface duquel sont distribués les miroirs de renvoi {21ⱼ}.

Le dispositif de contrôle peut comporter un cylindre rotatif, présentant une surface externe destinée à être éclairée par le faisceau laser de contrôle F_{c}, la surface externe étant réfléchissante au faisceau laser de contrôle F_{c} et parcourue par des zones non réfléchissantes distribuées de manière régulière le long de la surface externe.

Le dispositif de contrôle peut comporter plusieurs miroirs de contrôle {41ₖ}, avec N_{mc}>1, assemblés à un deuxième support rotatif, lequel est un cylindre à section circulaire ou polygonale, à la surface duquel sont distribués les miroirs de contrôle {41ⱼ}.

Le dispositif de contrôle peut comporter au moins un miroir fixe {43ₗ}_{l=1 ; Nmf} avec N_{mf}≥1, les miroirs de contrôle {41ₖ} étant couplés optiquement au ou aux miroirs fixes {43ₗ}, de sorte qu'un faisceau laser de contrôle F_{c} est tout d'abord réfléchi par un miroir de contrôle 41ₖ en direction du miroir fixe 43ₗ, lequel le réfléchit en retour vers le même miroir de contrôle 41ₖ.

Le ou les miroirs fixes {43ₗ} peuvent être fixés à un support de réglage angulaire, adapté à modifier une inclinaison angulaire du ou des miroirs fixes {43ₗ} vis-à-vis d'un axe de déplacement du ou des miroirs de contrôle {41ₖ}, de sorte que le faisceau laser de contrôle F_{c} est réfléchi par un miroir de contrôle 41ₖ, lorsqu'il occupe une position seuil P_{mc,th,m}, en avance de phase avec la réflexion du faisceau laser de puissance Fₚ par un miroir de renvoi 21ⱼ alors qu'il occupe une position référence P_{mr,ref,i}.

Les miroirs de contrôle {41ₖ} peuvent être distincts des miroirs de renvoi {21ⱼ}, le dispositif de contrôle comportant un seul miroir fixe {43ₗ} couplé optiquement à chacun des miroirs de contrôle {41ₖ}.

Les miroirs de contrôle {41ₖ} peuvent être confondus avec les miroirs de renvoi {21ⱼ}, les miroirs de renvoi {21ⱼ} formant les miroirs de contrôle {41ₖ}, le faisceau laser de puissance F_{L} étant incident sur les miroirs de renvoi {21ⱼ} suivant un premier axe optique (Δᵣ), et le faisceau laser de contrôle F_{c} étant incident sur les miroirs de contrôle {41ₖ} suivant un deuxième axe optique distinct du premier axe optique. Le dispositif de contrôle peut alors comporter plusieurs miroirs fixes {43ₗ}, couplé optiquement respectivement aux miroirs de contrôle {41ₖ}.

Le faisceau laser de puissance F_{L} peut présenter une puissance au moins égale à 10 GW et/ou dans lequel la cadence laser f_{L} est au moins égale à 50 Hz.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1 est une vue schématique et partielle d'un système laser selon un mode de réalisation, adapté à émettre un faisceau laser impulsionnel de puissance et à le distribuer suivant plusieurs directions de renvoi successives ;
la figure 2A est une vue longitudinale, schématique et partielle, d'un dispositif de renvoi et d'un dispositif de contrôle d'un système laser selon un autre mode de réalisation, dans lequel les miroirs de renvoi sont fixés sur un support cylindrique rotatif, et dans lequel les miroirs de contrôle sont tous couplés à un même miroir fixe ;
la figure 2B est une vue longitudinale, schématique et partielle, d'un dispositif de renvoi et d'un dispositif de contrôle d'un système laser selon une variante du mode de réalisation de la fig.2A, dans lequel les miroirs de renvoi jouent le rôle de miroirs de contrôle, et sont respectivement couplés à des miroirs fixes ;
la figure 3A est une vue schématique et partielle, en coupe transversale, d'un dispositif de renvoi et d'un dispositif de contrôle d'un système laser selon un autre mode de réalisation, dans lequel les miroirs de renvoi sont fixés sur un support polygonal rotatif, et dans lequel les miroirs de contrôle sont tous couplés à un même miroir fixe ;
la figure 3B est une vue schématique et partielle, en coupe transversale, d'un dispositif de renvoi et d'un dispositif de contrôle d'un système laser selon une variante du mode de réalisation de la fig.3A, dans lequel les miroirs de renvoi jouent le rôle de miroirs de contrôle, et sont respectivement couplés à des miroirs fixes ;
la figure 4A est une vue schématique et partielle, en vue de dessus, d'un photodétecteur matriciel, ici d'une photodiode à quatre quadrants ;
la figure 4B illustre le déplacement d'un spot laser d'un faisceau laser de contrôle sur la photodiode de la fig.4A, et illustre également un exemple de signal de détection s_{pd}(t) délivré par la photodiode ;
la figure 5A illustre un exemple d'un circuit électronique inhibiteur d'impulsions multiples, adapté à délivrer un signal de déclenchement s_{d}(t) lorsque le signal de détection s_{pd}(t) de la photodiode atteint une valeur seuil prédéfinie ;
la figure 5B est un exemple de chronogramme illustrant le fonctionnement du circuit électronique inhibiteur de la fig.5A ;
la figure 6 illustre un système laser selon un mode de réalisation où le dispositif de renvoi comporte un support polygonal rotatif ;
les figures 7A et 7B sont des vues schématiques et partielles, en coupe transversale, d'un miroir de renvoi et d'un miroir de contrôle fixés à un support cylindrique rotatif, à différents instants de rotation, dans le cas de la fig.7A où le miroir fixe ne présente pas un réglage angulaire de compensation du retard temporel d'origine électronique, et dans le cas de la fig.7B où le miroir fixe présente un tel réglage angulaire ;
la figure 8 illustre un système laser selon un autre mode de réalisation, dans lequel le faisceau laser de contrôle F_{c} est émis par une source laser auxiliaire distincte de la source laser d'injection.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. D'une manière générale, les termes « sensiblement », « environ », « de l'ordre de » signifient à 10% près, et de préférence à 5% près. En revanche, concernant les précisions angulaire et spatiale de renvoi, ces termes signifient à 50% près. Par ailleurs, les termes « compris entre ... et ... » et équivalents signifient que les bornes sont incluses, sauf mention contraire.

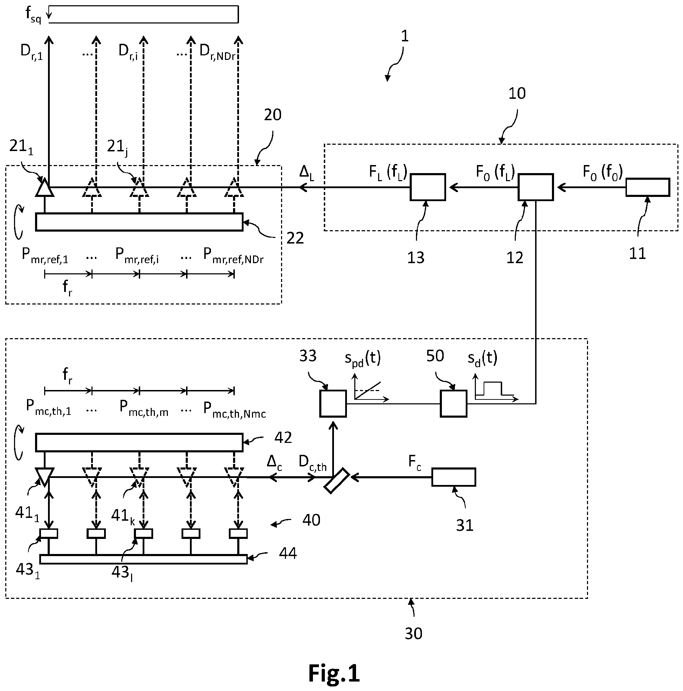

La figure 1 est une vue schématique et partielle d'un système laser 1 selon un mode de réalisation, adapté à émettre et à distribuer un faisceau laser impulsionnel de puissance F_{L}, suivant plusieurs directions de renvoi successives {D_{r,i}}_{i=1 ;NDr}, avec N_{Dr}>1, de façon périodique à une fréquence de balayage f_{sq}, avec de bonnes performances en termes de précision angulaire de renvoi Δθᵣ et/ou de précision spatiale de renvoi ΔDᵣ, et pour une cadence laser f_{L} élevée.

Le faisceau laser de puissance F_{L} est formé d'un train d'impulsions laser présentant une puissance P_{L} (puissance crête) élevée, par exemple au moins égale à 10 GW. La durée d'impulsion peut être faible, par exemple de l'ordre de la femtoseconde ou de la dizaine de femtosecondes. La cadence laser f_{L} peut être au moins égale à 50 Hz (dans le cas par exemple d'un oscillateur local cadencé à 10 MHz et pour 30 directions de renvoi), et peut être de l'ordre de quelques dizaines de hertz à quelques kilohertz. Par ailleurs, la précision angulaire de renvoi Δθᵣ peut être égale à ±15 µrad environ, et la précision spatiale de renvoi ΔDᵣ peut être égale à ±5 µm environ.

La séquence de distribution, i.e. le balayage par le faisceau laser de puissance F_{L} de l'ensemble des N_{Dr} directions de renvoi {D_{r,i}}, est effectuée à la fréquence de balayage f_{sq}. De plus, le renvoi par réflexion du faisceau laser de puissance F_{L} suivant chacune des directions de renvoi D_{r,i}, les unes après les autres, est effectué à la fréquence de renvoi fᵣ, laquelle est donc définie par la relation fᵣ = N_{Dr} × f_{sq}. A titre d'exemple, pour un nombre N_{Dr} de directions de renvoi {D_{r,i}} égal à 30, et une fréquence de balayage f_{sq} de 5 Hz, la fréquence de renvoi fᵣ est égale à 150 Hz. De préférence, la cadence laser f_{L} est égale à la fréquence de renvoi fᵣ, de sorte que, pour chaque direction de renvoi D_{r,i}, une seule impulsion laser du faisceau laser de puissance F_{L} est réfléchie par un miroir de renvoi 21ⱼ.

Le système laser 1 comporte a minima : un dispositif laser de puissance 10 pour émettre le faisceau laser de puissance F_{L} à la cadence laser f_{L}; un dispositif de renvoi 20 pour distribuer le faisceau laser de puissance F_{L} suivant les N_{Dr} directions de renvoi successives {D_{r,i}} ; et un dispositif d'asservissement 30 pour asservir la transmission du faisceau laser de puissance F_{L} à la fréquence de renvoi fᵣ définie par le dispositif de renvoi 20.

Comme décrit en détail plus loin, le dispositif d'asservissement 30 est ainsi adapté à émettre un signal de déclenchement s_{d}(t) permettant la sélection d'une impulsion laser F₀ de l'oscillation local (source laser d'injection 11), ce qu'on appelle en anglais *puise picking,* au moment où le miroir de renvoi est dans la position adéquate pour réfléchir le faisceau laser de puissance F_{L} suivant la direction de renvoi voulue tout en respectant les conditions en termes de précisions spatiale et/ou angulaire de renvoi.

Par ailleurs, en particulier lorsque l'oscillateur local (source laser d'injection 11) fonctionne en régime de blocage de modes passif, donc de manière autonome, le dispositif d'asservissement 30 est avantageusement adapté à ce que le signal de déclenchement s_{d}(t) de sélection d'impulsion laser est synchronisé (i.e. en phase) à l'impulsion laser de l'oscillateur local à prélever, ce qui permet de la prélever sans l'altérer. Il est alors de préférence centré sur l'impulsion laser à prélever, notamment lorsqu'une seule impulsion laser est sélectionnée à la cadence laser f_{L}. Le taux d'erreur (PER, pour *Pulse Error Rate* en anglais) est alors optimisé, ce qui particulièrement important notamment dans le cadre de la reconstruction tomographique.

Le dispositif laser de puissance 10 est adapté à émettre le faisceau laser impulsionnel de puissance F_{L} à la cadence laser f_{L}. Il comporte une source laser d'injection 11 (appelé oscillateur local), un sélecteur d'impulsion 12, et de préférence un amplificateur optique 13.

La source laser d'injection 11 (oscillateur local) est adaptée à émettre un faisceau laser impulsionnel d'injection F₀, qui présente une puissance moyenne P₀, qui peut être égale à 500 mW environ pour une puissance crête de 400 kW environ, et une fréquence de répétition f₀ (*pulse répétition rate,* en anglais). A titre d'exemple, la source laser 11 est un oscillateur local à modes bloqués, par exemple un laser femtoseconde. Le blocage de modes peut s'effectuer passivement (PML pour *passive mode-locking,* en anglais) par l'utilisation de miroirs à absorbant saturable à semiconducteur (SESAM pour *SEmiconductor Saturable Absorber Mirror,* en anglais) ou par lentille à effet Kerr (*Kerr Lens Mode Locking,* en anglais) au point focal dans le cristal laser. La source laser 11 peut être une source laser à cristal de titane-saphir (Ti-Sa), à cristal ou verre dopé néodyme ou ytterbium émettant à une fréquence de quelques dizaines à centaines de MHz. A titre d'exemple, il s'agit d'un laser Ti-Sa émettant à une longueur d'onde de 800 nm avec une fréquence de répétition f₀ de 80 MHz.

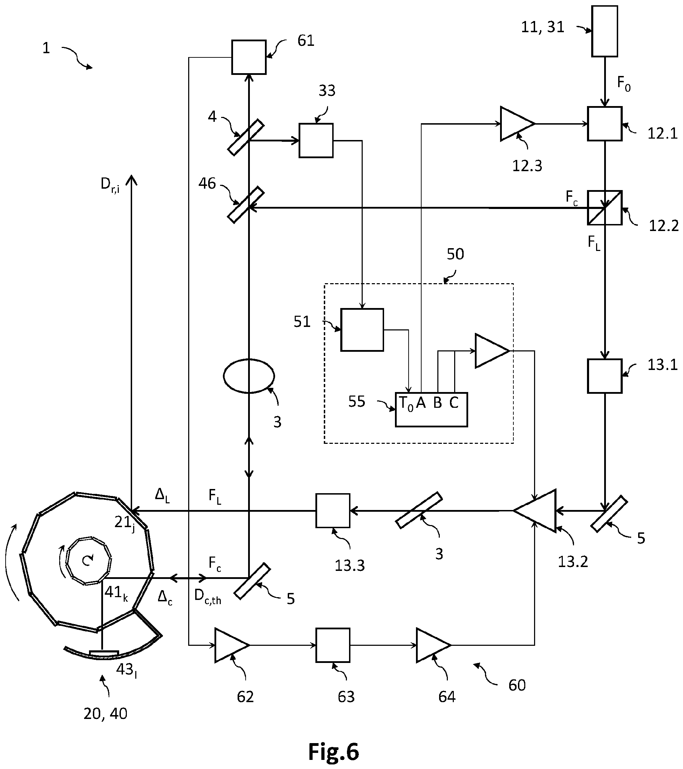

Le sélecteur d'impulsion 12 (*pulse picker,* en anglais) est disposé en aval de la source laser d'injection 11. Il est adapté à recevoir le faisceau laser d'injection F₀, et à sélectionner, en réponse à un signal de déclenchement s_{d}(t), au moins une impulsion laser, de préférence une seule impulsion, à une fréquence f_{L} (cadence laser) inférieure à f₀. En sortie, le faisceau laser d'injection F₀ présente donc une fréquence f_{L} et une puissance P₀. Comme décrit plus loin en référence à la fig.6, le sélecteur d'impulsion 12 peut être formé d'un modulateur de polarisation (appelé cellule de Pockels) 12.1 suivi d'un séparateur de polarisation 12.2 (par exemple un cube séparateur qui va séparer les deux contributions de lumière selon leur état de polarisation vertical ou horizontal).

L'amplificateur optique 13 est adapté à recevoir le faisceau laser d'injection F₀ transmis par le sélecteur d'impulsion 12 et à l'amplifier pour qu'il présente la puissance P_{L} souhaitée. L'amplification optique peut être effectuée par dérive de fréquence (CPA pour *Chirped Pulse Amplification* en anglais). Ainsi, l'impulsion laser reçue est étirée temporellement, amplifiée, puis comprimée temporellement. L'amplificateur optique 13 comporte alors un étireur temporel d'impulsions 13.1 (*stretcher* en anglais), un amplificateur régénératif 13.2 (et/ou des amplificateurs multi ou simple passage), et un compresseur temporel d'impulsions 13.3. L'impulsion laser peut alors présenter une largeur d'impulsion de l'ordre de quelques femtosecondes à quelques dizaines de femtosecondes et une puissance crête P_{L} de l'ordre de 10 à 100 TW, voire davantage. Le faisceau laser transmis forme alors le faisceau laser de puissance F_{L}. Il est transmis en direction du dispositif de renvoi 20.

Le dispositif de renvoi 20 est adapté à réfléchir et distribuer le faisceau laser de puissance F_{L} suivant les directions de renvoi successives {D_{r,i}}. Il comporte : au moins un miroir de renvoi {21ⱼ}_{j=1 ;Nmr} avec Nₘᵣ ≥ 1 ; et un dispositif mécanique de positionnement 22. Il reçoit le faisceau laser de puissance suivant un même axe optique incident Δ_{L}.

Le dispositif de renvoi 20 peut comporter un seul miroir de renvoi 21ⱼ (Nₘᵣ = 1) ou plusieurs miroirs de renvoi {21ⱼ}, auquel cas le nombre Nₘᵣ de miroirs de renvoi est de préférence égal au nombre N_{Dr} de directions de renvoi {D_{r,i}}. Le ou les miroirs de renvoi {21ⱼ} sont assemblés au dispositif mécanique de positionnement 22, qui assure leur déplacement pour le ou les positionner successivement, à une fréquence de renvoi fᵣ (ici égale à la cadence laser f_{L}), en des positions référence {P_{mr,ref,i}}_{i=1 ; NDr}. Les positions référence {P_{mr,ref,i}} sont associées respectivement aux directions de renvoi {D_{r,i}}. Autrement dit, la position référence P_{mr,ref,1} est associée à la direction de renvoi D_{r,i}, la position référence P_{mr,ref,2} est associée à la direction de renvoi D_{r,2}, et ainsi de suite. Par position référence P_{mr,ref,i} associée à la direction de renvoi D_{r,i}, on entend qu'un miroir de renvoi 21ⱼ, lorsqu'il est positionné en une position référence P_{mr,ref,i}, reçoit le faisceau laser de puissance F_{L} et le réfléchit suivant la direction de renvoi D_{r,i} correspondante. Notons que le faisceau laser F_{L} est alors collimaté (rayons parallèles entre eux) et non pas focalisé sur la surface du miroir de renvoi.

Le dispositif mécanique de positionnement 22 assure le déplacement continu du ou des miroirs de renvoi {21ⱼ}. Par déplacement continu, on entend que la vitesse de déplacement du ou des miroirs de renvoi {21ⱼ} est non nulle. Elle peut être constante ou variable. Il comporte au moins un support sur lequel le ou les miroirs de renvoi {21ⱼ} sont assemblés, le support étant mis en mouvement par un moteur (non représenté). Le déplacement du ou des miroirs de renvoi {21ⱼ} peut être de type rotatif ou translatif.

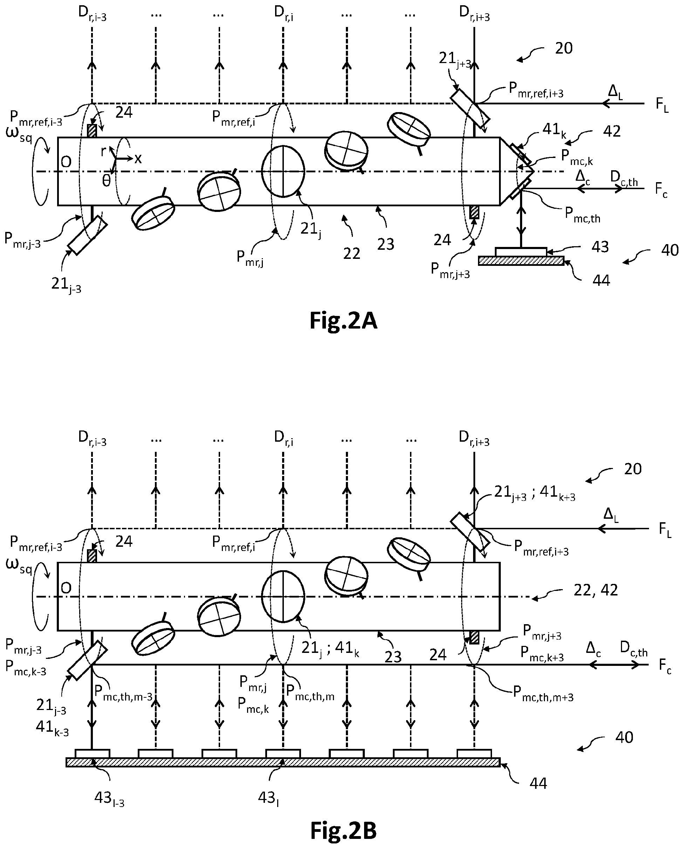

Les figures 2A et 2B sont des vues schématiques et partielles, en vue longitudinale, d'un dispositif de renvoi 20 ainsi que d'un dispositif de contrôle 40 du dispositif d'asservissement 30, selon des variantes de réalisation. Ici, le dispositif de renvoi 20 comporte Nₘᵣ miroirs de renvoi 21ⱼ avec Nₘᵣ > 1, par exemple égal à 30, comme le nombre N_{Dr} de directions de renvoi {D_{r,i}}. Ces fig. 2A et 2B sont évidemment schématiques et seule une moitié de longueur du cylindre est représentée ici. Le nombre de miroirs 21ⱼ illustrés sur les figures est différent de 30 par souci de clarté.

Le dispositif mécanique de positionnement 22 comporte un support rotatif 23 sur lequel tous les miroirs de renvoi {21ⱼ} sont fixés. Le support rotatif 23 est un cylindre à section circulaire dont l'axe de rotation est ici, à titre illustratif, parallèle à l'axe optique incident Δ_{L} du faisceau laser de puissance F_{L} et de l'axe optique incident Δ_{c} du faisceau laser de contrôle F_{c}. Le support cylindrique 23 est en rotation à une vitesse angulaire ω_{sq} = 2π×f_{sq}. Dans cet exemple où f_{sq} = 5Hz, la vitesse angulaire ω_{sq} est égale à 31 radis environ.

Les miroirs de renvoi {21ⱼ} sont distribués à différentes positions longitudinales et angulaires le long de l'axe longitudinal x du support cylindrique 23. On définit ainsi une position P_{mr,j}(t) pour chaque miroir de renvoi 21ⱼ. La position P_{mr,j} est définie ici dans le repère cylindrique (r,θ,x), où l'origine O de l'axe longitudinal x est ici située en une extrémité du cylindre. D'une manière générale, une position d'un miroir de renvoi correspond à la position du centre géométrique du miroir de renvoi (de la surface réfléchissante) dans le repère cylindrique (r,θ,x), ainsi qu'à l'orientation angulaire de la normale au miroir de renvoi dans ce même repère. De préférence, pour que le support cylindrique rotatif 23 et les miroirs de renvoi {21ⱼ} forment un système rotatif à moment d'inertie équilibré, le nombre Nₘᵣ de miroirs de renvoi {21ⱼ} est pair, et les miroirs sont distribués suivant l'axe azimutal θ de manière régulière. Des masselottes calibrées 24 sont fixées au support cylindrique 23 de manière opposée à chaque miroir 21ⱼ afin d'équilibrer le moment d'inertie en rotation et de garantir une rotation sans balourds, ce qui améliore les performances du système laser 1 en termes de renvoi optique.

Ainsi, chaque miroir de renvoi 21ⱼ a une position P_{mr,j}(t) qui varie dans le temps de manière périodique à une fréquence f_{sq}, qui correspond à la fréquence de balayage f_{sq} du système laser 1. A la fréquence de renvoi fᵣ (ici égale à la cadence laser f_{L}), chaque miroir de renvoi 21ⱼ vient occuper sa position référence P_{mr,ref,i}. Aussi, il reçoit le faisceau laser de puissance F_{L} (qui est incident suivant l'axe optique Δᵣ) et le réfléchit suivant la direction de renvoi D_{r,i} associée.

Dans cet exemple, les positions référence {P_{mr,ref,j}} sont identiques en termes d'orientation angulaire, et ne diffèrent entre elles que par la position longitudinale. Aussi, les directions de renvoi {D_{r,i}} sont contenues dans le plan (r,x) et sont parallèles entre elles. En variante, les positions référence {P_{mr,ref,j}} peuvent différer entre elles, de sorte que les directions de renvoi {D_{r,i}} peuvent ne pas être contenues dans un même plan de renvoi et/ou ne pas être parallèles entre elles. Notons également que, dans cet exemple, les miroirs de renvoi {21ⱼ} sont positionnés longitudinalement de manière régulière, mais un positionnement non régulier est bien entendu possible.

Les miroirs de renvoi {21ⱼ} présentent des dimensions permettant de réfléchir entièrement le faisceau laser de puissance F_{L}. A titre d'exemple, celui-ci présente un diamètre de quelques dizaines de millimètres, par exemple entre 40 et 50 mm. Les miroirs de renvoi {21ⱼ} peuvent ici présenter un diamètre de 60 mm. La période longitudinale entre deux miroirs de renvoi {21ⱼ} peut être de 40 mm, et pour 30 miroirs, le support cylindrique présente de préférence une longueur de 1,2 m environ.

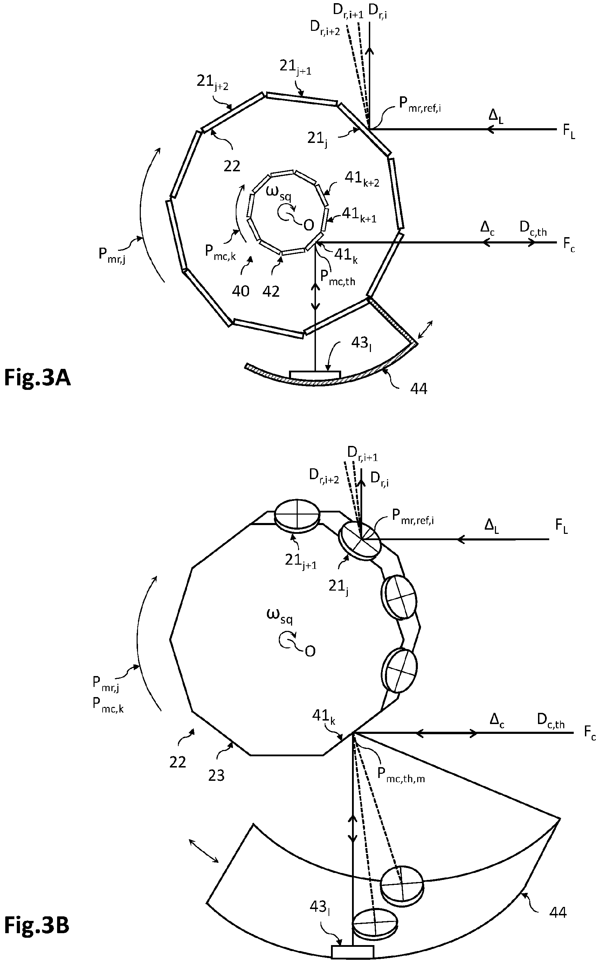

Les figures 3A et 3B sont des vues schématiques et partielles, en coupe transversale, d'un dispositif de renvoi 20 et d'un dispositif de contrôle 40 d'un dispositif d'asservissement selon des variantes de réalisation. Ici, le dispositif de renvoi 20 comporte Nₘᵣ miroirs de renvoi 21ⱼ avec Nₘᵣ > 1, par exemple égal à 10, comme le nombre N_{Dr} de directions de renvoi {D_{r,i}}.

Le dispositif mécanique de positionnement 22 comporte un support rotatif 23 (non illustré sur la fig.3A) sur lequel tous les miroirs de renvoi {21ⱼ} sont fixés. Le support rotatif 23 est une structure cylindrique à section polygonale (appelée par la suite support polygonal) dont l'axe de rotation est ici, à titre illustratif, orthogonal à l'axe optique incident Δ_{L} du faisceau laser de puissance F_{L} et de l'axe optique incident Δ_{c} du faisceau laser de contrôle F_{c}.

Sur la fig. 3A, on considère que tous les miroirs {41ₖ} du dispositif de contrôle 40 présentent le même angle entre, d'une part, la normale à la surface réfléchissante, et d'autre part, l'axe passant par le centre O de rotation et le centre géométrique de chaque miroir {41ₖ}. Les miroirs de renvoi {21ⱼ} sont situés en différentes faces du support polygonal 23, et présentent des orientations angulaires différentes les uns des autres. Autrement dit, chaque miroir de renvoi {21ⱼ} présente un angle différent entre la normale à la surface réfléchissante et l'axe passant par le centre O de rotation et le centre géométrique du miroir de renvoi. Ainsi, le miroir 21₁ présente une normale au plan d'incidence angulaire de 0° par rapport à l'axe passant par le centre de rotation, puis le miroir 21₂ présente une incidence angulaire de 0.5°, le troisième miroir une incidence angulaire de 1°, et ainsi de suite.

De préférence, pour que le support polygonal rotatif 23 et les miroirs de renvoi {21ⱼ} forment un système rotatif à moment d'inertie équilibré, le nombre Nₘᵣ de miroirs de renvoi {21ⱼ} est pair, et les miroirs sont distribués suivant l'axe azimutal θ de manière régulière. Dans ce cas, tous les faisceaux sont contenus dans le plan du support polygonal 23 (i.e. réfléchis dans un plan perpendiculaire à l'axe de rotation du polygone 23). Il est également possible de procéder de façon inverse, c'est-à-dire d'assembler tous les miroirs de renvoi {21ⱼ} selon le même angle et de modifier les orientations angulaires des miroirs {41ₖ} selon la même progression (0,5°, 1°, etc.).

Il est également possible d'orienter les normales au plan d'incidence de chaque miroir {21ⱼ} selon une combinaison de deux angles différents (un premier angle dans le plan contenu dans le polygone 23 et un second angle dans un plan perpendiculaire). Dans ce cas, seuls les miroirs {21ⱼ} sont orientés selon cette combinaison et les miroirs {41ₖ} sont tous orientés de façon similaire, en coopération avec le miroir fixe unique 43 qui a pour fonction de renvoyer le faisceau Fc dans sensiblement la même direction que la direction incidente.

La fig. 3B décrit une autre variante d'un support polygonal rotatif 23 qui ne comportent que les miroirs de renvoi {21ⱼ}, également utilisés comme miroirs de déclenchement {41ₖ} de la synchronisation. Il y a alors autant de miroirs fixes {43ₗ} que de miroirs de renvoi {21ⱼ}, ces miroirs fixes étant disposés sur un berceau sphérique 44 en coopération avec les miroirs de renvoi {43ₗ} pour renvoyer le faisceau de contrôle F_{c} dans sensiblement la même direction que la direction incidente. Selon cette variante, les normales des miroirs de renvoi {21ⱼ} sont orientées dans un plan perpendiculaire au plan du support polygonal 23 (par exemple, le premier miroir présente une incidence de 0°, le second miroir présente une incidence de 0,5° et ainsi de suite). Les miroirs de renvoi {43ₗ} sont alors placés le long d'une génératrice circulaire sur le support sphérique 44. Le centre de la sphère est situé à l'intersection entre le faisceau de contrôle F_{c} et la ligne formée par l'intersection entre le plan milieu du polygone 23 et la surface du miroir. Les miroirs {43ₗ} sont répartis le long de la génératrice circulaire, à des positions ajustables le long du parcours du faisceau réfléchi (voir flèche en pointillé sur la fig. 3B). La position de chaque miroir {43i} le long de cette génératrice permet également d'ajuster la phase du signal de déclenchement s_{d}(t) et ainsi l'angle d'émission de la direction de renvoi D_{r,i}.

Ici également, à la fréquence de renvoi fᵣ (ici égale à la cadence laser f_{L}), chaque miroir de renvoi {21ⱼ} vient occuper sa position référence P_{mr,ref,i} correspondante. Le faisceau de contrôle F_{c} est alors renvoyé suivant l'axe incident Δ_{c} lorsque le miroir 41ₖ est placé en correspondance avec le miroir fixe 43ₗ, c'est-à-dire lorsque le faisceau réfléchi par le miroir 43ₗ emprunte le même chemin en sens inverse suivant l'axe incident Δ_{c}. Aussi, il reçoit le faisceau laser de puissance F_{L} et le réfléchit suivant la direction de renvoi D_{r,i} associée. Les positions {P_{mr,ref,j}} sont identiques en termes de positions du centre géométrique de chaque miroir de renvoi, mais diffèrent entre elles par l'orientation angulaire de la surface réfléchissante. Aussi, les directions de renvoi {D_{r,i}} ont une même origine mais ne sont pas parallèles entre elles.

Le dispositif d'asservissement 30 est adapté à fournir un signal de déclenchement s_{d}(t) au sélecteur d'impulsion 12 autorisant ainsi la transmission du faisceau laser de puissance F_{L}. Il comporte : une source laser de contrôle 31 ; un dispositif de contrôle 40 (comportant au moins un miroir de contrôle {41ₖ} et un dispositif mécanique de positionnement 42), un photodétecteur matriciel 33, et un dispositif électronique de déclenchement 50.

La source laser de contrôle 31 est adaptée à émettre un faisceau laser de contrôle F_{c}. Le faisceau F_{c} peut provenir de la source laser d'injection 11 (oscillateur local) ou d'une source laser auxiliaire 31.

Dans le cas où le faisceau laser de contrôle F_{c} provient de la source laser d'injection 11, il est transmis en direction du dispositif de contrôle 40. Ce même faisceau laser F_{c} peut être utilisé pour resynchroniser le signal de déclenchement s_{d}(t). Il présente la même fréquence de répétition que la fréquence de répétition f₀ du faisceau laser d'injection F₀, et la phase du signal de déclenchement s_{d}(t), généré par le circuit électronique inhibiteur 51 du dispositif électronique de déclenchement 50, est alors ajustable par un générateur de délai temporel 55. Notons que la source laser d'injection 11 fournit donc, en fonction du signal de déclenchement s_{d}(t), le faisceau laser d'injection F₀ ou le faisceau laser de contrôle F_{c}.

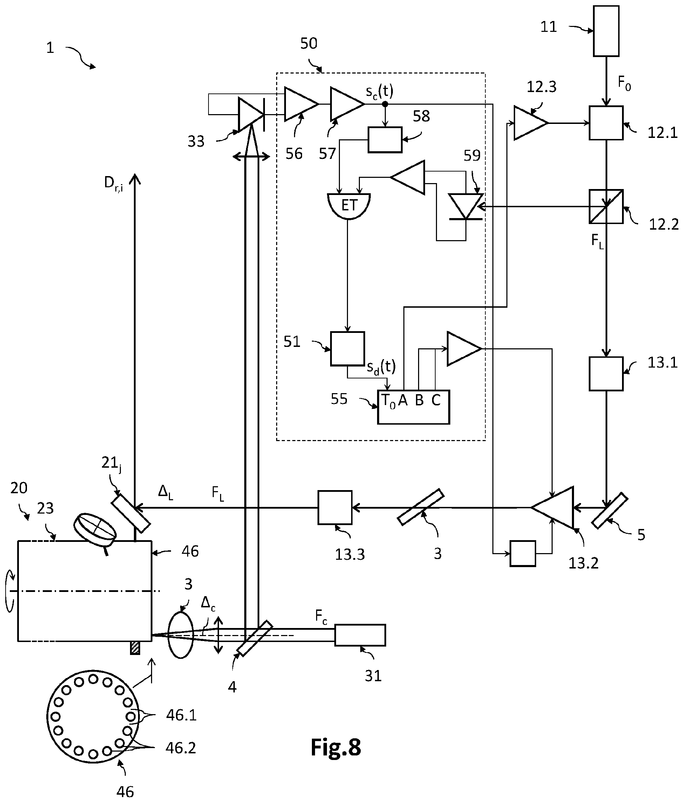

Selon une variante (cf. fig.8), le faisceau laser de contrôle F_{c} provient d'une source laser auxiliaire 31 qui fonctionne de préférence en mode continu. Comme décrit en détail plus loin, le faisceau laser de contrôle F_{c} est transmis en direction d'un encodeur rotatif 46 solidaire du support rotatif 23 pour fournir un signal de déclenchement s_{d}(t) lorsque l'angle de rotation de l'encodeur rotatif 46 franchit un ou plusieurs seuils angulaires définis par construction. Un tel encodeur peut être optique, comme illustré sur la fig.8, ou magnétique.

Le dispositif de contrôle 40 est adapté à réfléchir un faisceau laser de contrôle F_{c} suivant une même direction optique de retour D_{r,th} prédéfinie, par au moins un miroir de contrôle {41ₖ} lorsque celui-ci ou ceux-ci sont positionnés successivement en une ou des positions seuil {P_{mc,th,k}}. Il comporte : au moins un miroir de contrôle {41ₖ}_{k=1 ;Nmc} avec N_{mc}≥1 ; et un dispositif mécanique de positionnement 42. Il reçoit le faisceau laser de contrôle F_{c} qui est incident suivant l'axe optique Δ_{c}.

Le dispositif de contrôle 40 peut comporter un seul miroir de contrôle (N_{mc} = 1) ou plusieurs miroirs de contrôle {41ₖ}, auquel cas le nombre N_{mc} est de préférence égal au nombre N_{Dr} de directions de renvoi. Le ou les miroirs de contrôle {41ₖ} sont assemblés au dispositif mécanique de positionnement 42, qui assure leur déplacement continu rotatif pour le ou les positionner successivement, à la fréquence de renvoi fᵣ (ici égale à la cadence laser f_{L}), en au moins une position seuil {P_{mc,th,m}}_{m=1 ;Npth}, avec Nₚₜₕ≥1. Les positions seuil {P_{mr,ref,i}} sont associées respectivement à une même direction optique de retour D_{r,th} du faisceau laser de contrôle F_{c}, qui est ensuite transmis vers le photodétecteur matriciel.

Autrement dit, la position seuil P_{mc,th,1} est associée à la direction seuil de retour D_{c,th}, la position seuil P_{mc,th,2} également, et ainsi de suite. Par position seuil P_{mc,th,m} associée à la même direction seuil de retour D_{c,th}, on entend qu'un miroir de contrôle 41ₖ, lorsqu'il est positionné en une position seuil P_{mc,th,m}, reçoit le faisceau laser de contrôle F_{c} et le réfléchit suivant une même direction seuil de retour D_{c,th}, laquelle est de préférence coaxiale à l'axe optique incident Δ_{c} du faisceau laser de contrôle F_{c} (alignement optique).

Le dispositif mécanique de positionnement 42 assure le déplacement continu rotatif du ou des miroirs de contrôle {41ₖ}. Il comporte au moins un support sur lequel le ou les miroirs de renvoi {21ⱼ} sont assemblés, le support étant mis en mouvement rotatif par un moteur pouvant tourner à une vitesse de rotation angulaire constante ou lentement variable. De facto, le moteur peut, de manière facultative, être asservi en vitesse de rotation (en effet, le dispositif électronique de déclenchement 50 (et plus précisément le circuit électronique inhibiteur 51) s'adapte à la vitesse de rotation réelle du support rotatif 23). De préférence, dans le cas où le déplacement des miroirs de renvoi {21ⱼ} est rotatif, comme celui des miroirs de contrôle {41ₖ}, ces derniers sont fixés au même support que celui des miroirs de renvoi {21ⱼ}.

Sur le mode de réalisation des fig .2A et 2B, et sur celui des fig. 3A et 3B, le dispositif de contrôle comporte N_{mc} miroirs de contrôle 41ₖ avec Nₘᵣ > 1, par exemple égal à au nombre N_{mc} de miroirs de renvoi {21ⱼ}.

Dans le cas des fig.2A et 2B, le dispositif mécanique de positionnement 42 comporte un support conique fixé à une extrémité du support cylindrique 23, rotatif suivant l'axe de rotation du support cylindrique. Tous les miroirs de contrôle {41ₖ} sont fixés au support conique du dispositif 42, et sont distribués suivant l'axe azimutal θ, de préférence de manière régulière. Ici également, la position P_{mc,k}(t) correspond à la position du centre géométrique du miroir de contrôle (de sa surface réfléchissante) dans le repère cylindrique (r,θ,x), ainsi qu'à l'orientation angulaire du miroir de contrôle {41ₖ} dans ce même repère. De préférence, pour que le moment d'inertie soit équilibré, comme pour les miroirs de renvoi {21ⱼ}, le nombre N_{mc} de miroirs de contrôle {41ₖ} est pair et ils sont distribués suivant l'axe azimutal θ de manière régulière.

Ainsi, chaque miroir de contrôle 41ₖ a une position P_{mc,k}(t) qui varie dans le temps de manière périodique à une fréquence f_{sq}. A la fréquence de renvoi fᵣ (ici égale à la cadence laser f_{L}), chaque miroir de contrôle 41ₖ vient occuper une position seuil P_{mc,th,m}. Aussi, il reçoit le faisceau laser de contrôle F_{c}, et le réfléchit suivant la même direction seuil de retour D_{c,th}, laquelle est de préférence coaxiale avec l'axe optique incident Δ_{c}.

Les miroirs de contrôle {41ₖ} présentent des dimensions permettant de réfléchir entièrement le faisceau laser de contrôle F_{c}. A titre d'exemple, celui-ci présente un diamètre de quelques millimètres, par exemple égal à 2mm. Les miroirs de contrôle {41ₖ} peuvent ici présenter un diamètre de 5mm à 10 mm (fixés par une monture, par exemple, de 12,7 mm de diamètre, soit ½ pouce).

Le dispositif de contrôle 40 comporte, de préférence, un ou plusieurs miroirs fixes {43ₗ}_{l=1 ;Nmf}, couplé(s) optiquement, respectivement, au ou aux miroirs de contrôle {41ₖ}. Aussi, lorsque le faisceau laser de contrôle F_{c} est reçu par un miroir de contrôle 41ₖ suivant l'axe optique incident Δ_{c}, celui-ci le réfléchit en direction du miroir fixe 43ₗ, lequel réfléchit le faisceau en direction du même miroir de contrôle 41ₖ qui le renvoie suivant une direction qui est coaxiale, ou non, avec l'axe optique incident Δ_{c} en fonction de la position du miroir de contrôle 41ₖ en cours de rotation. Le miroir fixe 43ₗ couplé au miroir de contrôle 41ₖ permet d'assurer la sélectivité angulaire du déclenchement.

Le ou les miroirs fixes {43ₗ} sont de préférence assemblés à un support goniométrique 44, ou équivalent (monture Gimbal, par exemple), dont on peut modifier la position angulaire par rapport à un axe de rotation du goniomètre passant par le point de contact du faisceau de contrôle F_{c} avec le miroir de contrôle 41ₖ. Comme décrit en détail plus loin, cela permet de générer un signal de déclenchement s_{d}(t) en avance de phase sur le mouvement du miroir de renvoi 21ⱼ, permettant ainsi de compenser les éventuels retards temporels de déclenchement d'origines électroniques et optiques (propagation des faisceaux laser). Cette avance de phase d'origine mécanique permet d'obtenir un fonctionnement optimal de l'asservissement aux cadences laser les plus élevées (kHz), c'est-à-dire une sélection d'une impulsion laser (de préférence unique) de la source laser d'injection 11 (oscillateur local) satisfaisant aux conditions voulues en termes de précision spatiale et/ou angulaire de renvoi.

En référence à la fig.2A, le dispositif de contrôle 40 comporte ici un seul miroir fixe 43 couplé optiquement aux miroirs de contrôle {41ₖ}. Dans cet exemple, il n'y a qu'une position seuil P_{mc,th} pour tous les miroirs de contrôle {41ₖ}. Aussi, le faisceau laser de contrôle F_{c} est réfléchi une première fois en direction du miroir fixe 43 par le miroir de contrôle 41ₖ en cours de rotation, qui le réfléchit en direction du même miroir de contrôle 41ₖ, lequel le réfléchit une deuxième fois. Le miroir fixe 43ₗ est fixé à un support goniométrique 44, dont l'axe de rotation est coaxial à l'axe optique incident Δ_{c}.

Au cours du mouvement rotatif du miroir de contrôle 41ₖ, le faisceau laser de contrôle F_{c} est renvoyé, après les 3 étapes de réflexion, suivant une direction (ici non coaxiale avec l'axe optique incident Δ_{c}) différente de la direction seuil de retour D_{r,th}, sauf lorsqu'il occupe la position seuil P_{mc,th}. En effet, lorsque c'est le cas, le faisceau laser de contrôle F_{c} est renvoyé suivant la direction seuil de retour D_{c,th}, qui est ici coaxiale avec l'axe optique incident Δ_{c}. Le faisceau laser de contrôle F_{c} présente alors un alignement optique de son trajet optique retour (suivant la direction D_{r,th}) avec son trajet optique aller (suivant l'axe optique incident Δᵣ).

En référence à la fig.2B, le dispositif de contrôle 40 comporte plusieurs miroirs fixes {43ₗ} couplés optiquement respectivement aux miroirs de contrôle {41ₖ}, avec N_{mf} = N_{mc}. Il y a donc ici autant de miroirs fixes {43ₗ} que de miroirs de contrôle {41ₖ}, et il y a alors autant de positions seuil {P_{mc,th,m}} que de miroirs de contrôle {41ₖ} : Nₚₜₕ = N_{mc}. Les miroirs fixes 43ₗ sont tous fixés au même support goniométrique 44, dont l'axe de rotation est coaxial à l'axe optique incident Δ_{c}.

Dans cet exemple, les miroirs de renvoi {21ⱼ} sont également les miroirs de contrôle {41ₖ}. Aussi, alors qu'un miroir de renvoi assure la réflexion du faisceau laser de puissance F_{L} suivant une direction de renvoi D_{r,i}, un autre miroir de renvoi assure la fonction de miroir de contrôle, et réfléchit le faisceau laser de contrôle F_{c} en direction du miroir fixe 43ₗ correspondant.

En référence à la fig.3A, le dispositif mécanique de positionnement 42 comporte un support polygonal fixé au support polygonal 22 des miroirs de renvoi, et ayant un axe de rotation coaxial à celui du support polygonal 22. Les miroirs de contrôle {41ₖ} sont disposés sur les facettes du support polygonal 42. Le dispositif de contrôle 40 comporte un seul miroir fixe {43ₗ} couplé optiquement aux miroirs de contrôle {41ₖ}. Aussi, les miroirs de contrôle {41ₖ} présentent une seule et même position seuil P_{mc,th}. Cette configuration est similaire à celle de la fig.2A. Le miroir fixe 43ₗ est fixé sur un support goniométrique 44, dont l'axe de rotation est ici orthogonal à l'axe optique incident Δ_{c} et passe par la position seuil P_{mc,th}. Le centre de rotation du support goniométrique est situé à l'intersection entre le faisceau de contrôle Fc et la surface du miroir 41k lorsque celui-ci occupe la position seuil.

En référence à la fig.3B, le dispositif de contrôle 40 comporte plusieurs miroirs fixes {43ₗ} couplés optiquement respectivement aux miroirs de contrôle {41ₖ}, avec N_{mf} = N_{mc}. Ici, les miroirs de renvoi {21ⱼ} font office de miroirs de contrôle {41ₖ}, de sorte que le dispositif mécanique de positionnement 22 est également celui du dispositif de contrôle. Il y a donc autant de positions seuil {P_{mc,th,m}} que de miroirs de contrôle {41ₖ}. Cette configuration est similaire à celle de la fig.2B. Les miroirs fixes 43ₗ sont tous fixés au même support goniométrique 44.

Notons ici que les configurations de la fig.2B et de la fig.3B, où les miroirs de renvoi {21ⱼ} assurent aussi la fonction de miroirs de contrôle {41ₖ}, sont avantageuses, dans la mesure où les contraintes de réglages sont reportées sur les miroirs fixes {43ₗ}, dont la monture n'est pas soumise aux vibrations et aux accélérations, ce qui permet d'améliorer la fiabilité du système laser 1 ainsi que ses performances en termes de précisions spatiale et/ou angulaire de renvoi.

Le dispositif d'asservissement 30 comporte un photodétecteur matriciel 33. Il est adapté à recevoir le faisceau laser de contrôle F_{c} réfléchi par un miroir de contrôle 41ₖ en cours de rotation, et à émettre en réponse un signal de détection s_{pd}(t) représentatif du déplacement du miroir de contrôle 41ₖ. Le signal de détection s_{pd}(t) passe par une valeur seuil s_{pd,th} associée à la ou les positions seuil {P_{mc,th,m}}. Plus précisément, le signal de détection s_{pd}(t) dépend de la position du spot laser du faisceau laser de contrôle F_{c} sur la surface sensible du photodétecteur matriciel 33, cette position étant fonction de la position P_{mc,k}(t) du miroir de contrôle 41ₖ, en cours de rotation, alors qu'il réfléchit le faisceau laser de contrôle F_{c}.

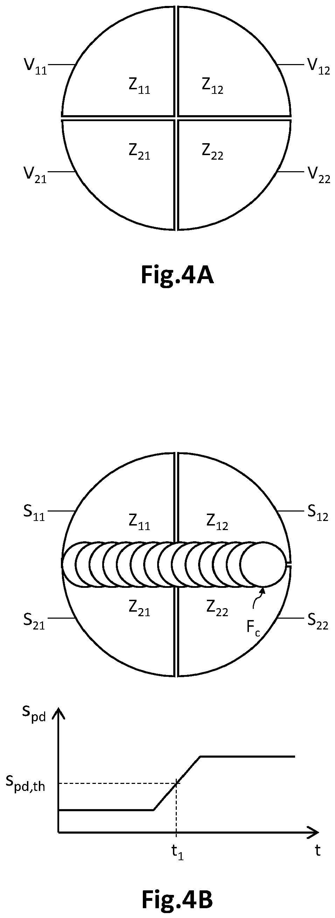

Les figures 4A et 4B illustrent de manière schématique et partielle un photodétecteur matriciel 33 selon un mode de réalisation. Ici, il s'agit d'une photodiode à quatre-quadrants (appelée photodiode 4Q dans la suite du document), comportant 4 zones sensibles identiques, placées de manière symétrique deux à deux. Les zones de détection sont notées Zₘₙ, avec m et n allant de 1 à 2, où m est l'indice des lignes et n celui des colonnes, et fournissent chacune un signal électrique de détection noté Vₘₙ. Bien entendu, ce choix n'est nullement limitatif et d'autres types de détecteurs matriciels peuvent être utilisés.

En référence à la fig.4A, Dans le cas d'un spot laser du faisceau laser de contrôle F_{c} d'un diamètre de l'ordre de 5mm (après propagation en espace libre sur une distance de plusieurs mètres), les quadrants peuvent présenter une forme quadri-circulaire ou carrée de largeur de l'ordre de 2.5 à 5 mm. Ils peuvent être séparés électriquement d'une zone intermédiaire non photosensible de quelques dizaines de microns de largeur. Rappelons que le diamètre d'un spot laser peut être défini à partir du contour où l'intensité est égale à 1/e² de sa valeur maximale.

Ici, le spot laser se déplace sur la surface active de la photodiode 4Q 33 suivant un axe horizontal. Aussi, le signal de détection s_{pd}(t) peut alors être égal à (V₁₂(t)+V₂₂(t) - (V₁₁(t)+V₂₁(t)). Pour cela, la photodiode 33 comporte un circuit électronique additionneur-soustracteur à 4 voies, recevant en entrées les valeurs V₁₁, V₁₂, V₂₁ et V₂₂ et fournissant en sortie s_{pd} = (V₁₂+V₂₂) - (V₁₁+V₂₁).

De même, le spot laser peut se déplacer sur la surface active de la photodiode 4Q 33 suivant un axe vertical à une vitesse beaucoup plus faible, du fait de l'évolution mécanique éventuelle des surfaces de réflexion et de la fluctuation éventuelle de pointé angulaire du faisceau laser de contrôle F_{c}, toutes deux liées aux fluctuations thermomécaniques. Un second signal égal à [V₁₁(t)+V₁₂(t)] - [V₂₁(t)+V₂₂(t)] est alors utilisable pour contrôler la verticalité du spot laser. Ce signal est fourni par un second circuit additionneur-soustracteur recevant en entrées les valeurs V₁₁, V₁₂, V₂₁ et V₂₂ et fournissant en sortie le signal [V₁₁(t)+V₁₂(t)] - [(V₂₁(t)+V₂₂(t)]. Ce signal filtré passe-bas est alors communiqué à l'entrée d'une platine de positionnement qui peut être actionnée par une céramique piézoélectrique, par exemple, permettant un ajustement centré du spot laser de façon automatique.

En référence à la fig.4B, le montage optique du dispositif d'asservissement 30 a été ici préalablement réglé de sorte que le spot laser est positionné au centre de la surface sensible de la photodiode 4Q 33. Ainsi, lorsqu'il est réfléchi par un miroir de contrôle 41ₖ en cours de rotation, le spot laser parcourt la surface sensible de la photodiode 33 suivant un axe donné, ici l'axe horizontal.

Dans un premier temps, la position P_{mc,k}(t) du miroir de contrôle 41ₖ est en amont de la position seuil P_{mc,th,m} correspondante. Le faisceau laser de contrôle F_{c} est donc réfléchi par le dispositif de contrôle 40 et est renvoyé suivant une direction différente de la direction seuil de retour D_{c,th}. Le spot laser se déplace sur les zones sensibles Z₁₁ et Z₂₁, de sorte que le signal de détection s_{pd}(t) présente une valeur constante, ici négative (en-dessous du seuil de détection).

Puis, la position P_{mc,k}(t) se rapproche de la position seuil P_{mc,th,m}. Le spot laser commence à éclairer les zones sensibles Z₁₂ et Z₂₂, de sorte que le signal de détection s_{pd}(t) augmente progressivement. Il augmente de façon linéaire lorsque le faisceau laser de contrôle F_{c} émet en continu, ou par paliers lorsque le laser émet de façon impulsionnel (i.e. oscillateur local). Lorsque le miroir de contrôle 41ₖ occupe la position seuil P_{mc,th,m}, le faisceau laser de contrôle F_{c} est réfléchi suivant la direction seuil de retour D_{c,th}, de sorte que le spot laser est situé en une position telle que la valeur du signal de détection s_{pd}(t) est égale à la valeur seuil s_{pd,th}. Notons ici que la valeur seuil s_{pd,th} est non nulle (ajout d'une constante), de manière à éviter un déclenchement intempestif du sélecteur d'impulsion par le bruit des composants électroniques lorsque le spot laser n'éclaire pas la photodiode 4Q 33.

Enfin, la position P_{mc,k}(t) du miroir de contrôle 41ₖ s'éloigne de la position seuil P_{mc,th,m} correspondante. Le spot laser quitte les zones sensibles Z₁₁ et Z₂₁, et n'éclaire que les zones sensibles Z₁₂ et Z₂₂. Le signal de détection s_{pd}(t) présente alors une valeur constante, ici positive (au-dessus du seuil de détection).

Le dispositif d'asservissement 30 comporte un dispositif électronique de déclenchement 50. Ce dispositif électronique 50 comporte un circuit électronique inhibiteur d'impulsions multiples 51 et de préférence un générateur de retard 55. Le circuit électronique inhibiteur 51 est adapté à émettre le signal de déclenchement s_{d}(t) lorsque le signal de détection s_{pd}(t) atteint ladite valeur seuil s_{pd,th}, c'est-à-dire lorsqu'un miroir de contrôle 41ₖ occupe la position seuil P_{mc,th,m} correspondante, et réfléchit donc le faisceau laser de contrôle suivant la direction seuil de retour D_{c,th}. Aussi, le sélecteur d'impulsion 12, en réponse au signal de déclenchement s_{d}(t), transmet le faisceau laser de puissance F_{L} qui est alors reçu par un miroir de renvoi 21ⱼ alors qu'il occupe une position référence P_{mr,ref.i}, et est donc réfléchi suivant la direction de renvoi D_{r,i} correspondante. Autrement dit, le miroir de renvoi n'est pas éclairé par le faisceau laser de puissance F_{L} sauf lorsqu'il occupe une position référence P_{mr,ref.i}.

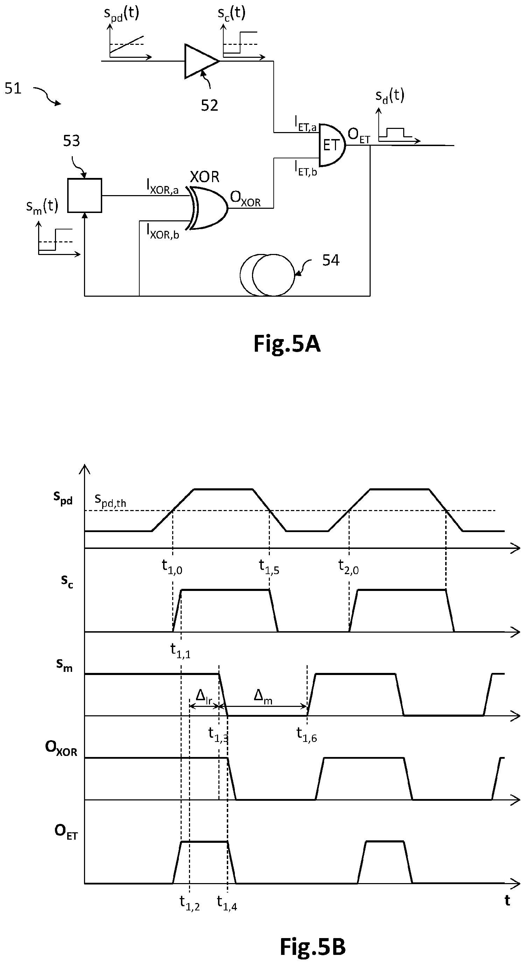

La figure 5A illustre un schéma d'un circuit électronique inhibiteur 51 selon un mode de réalisation. Il est donné ici à titre illustratif, étant entendu que d'autres configurations sont possibles. La figure 5B est un chronogramme illustrant le fonctionnement du circuit électronique inhibiteur 51 de la fig.5A. Notons ici que les composants électroniques du circuit électronique 51 comportent des temps de réponse non nuls. Ces temps de réponse sont illustrés sur la fig.5B de manière purement illustrative : chaque temps de réponse peut être plus ou moins important et comporter une certaine tolérance (notion de gigue temporelle).

En référence à la fig.5A, le circuit électronique inhibiteur 51 permet d'inhiber des impulsions laser successives émises par la source laser d'injection 11 (oscillateur local) pour n'en sélectionner, à la cadence laser f_{L}, de préférence qu'une seule. Il comporte tout d'abord un comparateur 52 connecté à la photodiode 4Q 33. Il reçoit donc le signal de détection s_{pd}(t), compare la valeur reçue à la valeur seuil s_{pd,th}, et fournit en retour un signal logique s_{c}(t), par exemple 0 lorsque s_{pd}(t) < s_{pd,th} et 1 lorsque s_{pd}(t) ≥ s_{sp,th}. Le comparateur 52 est choisi pour avoir un temps de réponse très court, par exemple de l'ordre de 2ns.

La sortie du comparateur 52 est connectée à l'entrée I_{ET,a} d'une porte logique ET (AND en anglais). L'autre entrée I_{ET,b} de la porte logique ET est connectée à la sortie d'une porte logique XOR (OU exclusif). Cette porte logique XOR présente une entrée I_{XOR,a} connectée à un circuit monostable 53 (également appelé bascule monostable) et une autre entrée connectée à la sortie de la porte logique ET via une ligne à retard 54. Par ailleurs, le circuit monostable 53 est déclenchable sur un front montant provenant de la sortie de la porte logique ET (également via la ligne à retard 54) et est armé à l'état logique 1 par défaut, en attente du signal de déclenchement s_{d}(t). La sortie de la porte logique ET forme ainsi le signal de déclenchement s_{d}(t), qui est transmis au sélecteur d'impulsion 12 (ici au modulateur 12.1 via un amplificateur 12.3).

Le dispositif électronique de déclenchement 50 comporte avantageusement un générateur de retard programmable 55, connecté entre la sortie de la porte logique ET et le sélecteur d'impulsion 12. La phase du signal de déclenchement s_{d}(t) peut ainsi être ajustée par le générateur de retard 55, de sorte que le signal de déclenchement s_{d}(t) est reçu par le sélecteur d'impulsion 12 en phase avec l'impulsion laser (à prélever) de la source laser d'injection 11. Aussi, le signal s_{d}(t) est resynchronisé avec les impulsions laser générées par la source laser d'injection 11. Cela peut se traduire par le fait que l'impulsion laser à prélever est centrée sur le signal s_{d}(t). Ainsi, l'impulsion laser peut être sélectionnée sans altération et transmise à l'amplificateur optique 13. Le retard appliqué peut être prédéfini, voire être paramétré en temps réel pour être fonction de la vitesse de rotation du support rotatif 23 (et donc de la cadence laser f_{L}).

En référence à la fig.5B, pour t < t_{1,0}, le signal de détection s_{pd}(t) présente une valeur inférieure à la valeur seuil s_{pd,th}. Le comparateur 52 fournit alors un signal s_{c}(t) dont la valeur vaut 0, qui est délivré à l'entrée I_{ET,a} de la porte ET. Par ailleurs, le circuit monostable 53 fournit un signal sₘ(t) dont la valeur vaut 1. Cette valeur est délivrée à l'entrée I_{XOR,a} de la porte XOR. Cependant, quelle que soit la valeur délivrée par la porte XOR, la porte ET délivre la valeur 0, dans la mesure où l'entrée I_{ET,a} est à 0. La sortie à 0 de la porte ET est rebouclée à l'entrée I_{XOR,b} de la porte XOR. Les entrées étant à 1 et à 0, la porte XOR délivre la valeur 1. Aussi, dès que le comparateur 52 fournira la valeur 1, la porte ET pourra basculer sur la valeur 1 formant alors le signal de déclenchement Sd(t).

A l'instant t = t_{1,0}, le signal de détection s_{pd}(t) atteint la valeur seuil s_{pd,th}. Aussi, le comparateur 52 bascule à l'état logique 1 à l'instant t_{1,1}, ce qui provoque le passage de la porte ET à l'état logique 1. Le front de montée du signal de déclenchement s_{d}(t) est donc généré.

Avec un certain retard Δ_{Ir} prédéfini par la ligne à retard 54, la valeur logique 1 issue de la porte ET est délivrée à l'entrée I_{XOR,b} de la porte XOR. Celle-ci se retrouve alors avec ses deux entrées à l'état logique 1, ce qui provoque son passage à l'état logique 0 à partir de l'instant t_{1,3}. Aussi, à partir de l'instant t_{1,4}, la porte ET passe à l'état logique 0, ce qui correspond au front descendant du signal de déclenchement s_{d}(t). Aussi, la largeur temporelle du signal de déclenchement s_{d}(t) transmis au sélecteur d'impulsion 12 est donc essentiellement définie par le retard Δ_{Ir} de la ligne à retard 54 (et par les temps de réponse des composants électroniques).

En parallèle, le front de montée délivré par la porte ET à partir de l'instant t_{1,2} est également délivré avec le retard Δ_{Ir} au circuit monostable 53, qui passe également à l'état logique 0 à partir de l'instant t_{1,3}. Aussi, les deux entrées de la porte XOR sont à l'état logique 0, de sorte que la sortie de la porte XOR passe à l'état 0.

Aussi, l'entrée I_{ET,b} de la porte ET est forcée à l'état 0, ce qui permet de bloquer tous les changements d'état logique qui se présenteraient à l'entrée I_{ET,a}, dus par exemple à des oscillations de tension en sortie de la photodiode 33. On réduit ainsi les risques de déclenchement intempestif qui ne serait pas associés à la position seuil P_{mc,th,m} du miroir de contrôle 41ₖ. Le déclenchement intempestif d'impulsions multiples peut être dû aux fluctuations de puissance (*pulse-to-pulse repeatability*) de l'oscillateur local (cf. oscillations de tension en sortie de photodiode 33), notamment à basse cadence laser.

Le circuit monostable 53 reste à l'état 0 pendant une durée Δₘ prédéfinie, jusqu'à l'instant t_{1,6}, le temps que le spot laser du faisceau laser de contrôle F_{c} quitte la surface sensible de la photodiode 33, ce qui est le cas ici à l'instant t_{1,5}. Ensuite, le circuit monostable 53 se remet à l'état logique 1, ce qui réarme également la porte XOR. On se retrouve alors dans la configuration de départ. Le circuit électronique inhibiteur 51 est à nouveau en mesure de détecter le passage de la valeur seuil dans le signal de détection s_{pd}(t) et d'émettre en réponse le signal de déclenchement Sd(t).

Ainsi, le système laser 1 est effectivement adapté à distribuer le faisceau laser impulsionnel de puissance F_{L} suivant plusieurs directions de renvoi successives {D_{r,i}}, avec la précision spatiale de renvoi ΔDᵣ et/ou la précision angulaire de renvoi Δθᵣ attendues, avec une cadence laser f_{L} qui peut être élevée. La cadence laser f_{L} est asservie sur la fréquence de renvoi fᵣ (ici égale à la cadence laser f_{L}) du dispositif de renvoi 20. En effet, le dispositif laser de puissance 10, et plus précisément le sélecteur d'impulsion 12, est asservi au dispositif de renvoi 20 par le biais du dispositif d'asservissement 30, et plus précisément au moyen du dispositif de contrôle 40 qui fonctionne à la même fréquence de renvoi fᵣ (de préférence égale à la cadence laser f_{L}) que le dispositif de renvoi 20. Aussi, le dispositif de renvoi 20 présente un caractère 'maître' alors que le dispositif laser de puissance 10 présente un caractère 'esclave' ; c'est le dispositif de renvoi 20 qui conditionne la fréquence de renvoi fᵣ, à laquelle se cale le dispositif laser de puissance 10 au moyen du dispositif d'asservissement 30. Aussi, le signal de déclenchement s_{d}(t) est généré de sorte que l'impulsion laser de puissance est sélectionnée et transmise au moment où le miroir de renvoi 21ⱼ est dans la position adéquate pour la réfléchir suivant la direction de renvoi correspondante. De plus, par la présence avantageuse du générateur de retard 55, le dispositif d'asservissement 30 permet de s'assurer que le signal de déclenchement s_{d}(t) est en phase avec l'impulsion laser générée par la source laser d'injection 11, de manière à la prélever sans altération et à la communiquer ensuite à l'amplificateur optique 13 à l'instant voulu. Par ailleurs, notons que le système laser 1 est particulièrement simple à réaliser et peu volumineux. Il consomme peu d'énergie, ce qui le rend compatible aux exigences d'une exploitation industrielle.

La figure 6 est une vue schématique et partielle d'un système laser 1 selon un mode de réalisation où le dispositif de renvoi 20 et le dispositif de contrôle 40 sont similaires à ceux de la fig.3A, et où le dispositif d'asservissement 30 comporte un circuit optoélectronique d'asservissement du gain 60.

L'amplificateur régénératif 13.2 est ici pompé optiquement de manière impulsionnelle, de manière à optimiser la tenue thermique et la consommation électrique. Un signal de déclenchement du gain (appelé par la suite : signal de pompage sₚ(t)) peut alors être fourni à l'amplificateur régénératif 13.2 par le circuit optoélectronique d'asservissement du gain 60. Celui-ci comporte une photodiode 4Q 61 (ici une photodiode 4Q), un comparateur 62, un circuit monostable 63, et un amplificateur 64. D'autres schémas électriques sont évidemment possibles.

La transmission du signal de pompage sₚ(t) intervient en avance de phase pour établir le gain de l'amplificateur avant émission de l'impulsion laser par la source laser d'injection 11 (oscillateur local). Pour un laser à cristal de titane-saphir, le signal de pompage sₚ(t) est émis en avance d'une durée de l'ordre de 3 µs environ. Notons que la plupart des laser Ytterbium étant pompés par un laser émettant en continu, ce circuit optoélectronique d'asservissement du gain 60 peut ne pas être utilisé avec ce type de laser.

La photodiode 4Q 61 détecte le faisceau laser de contrôle F_{c} une fois réfléchi par le miroir de contrôle 41ₖ, et fournit un signal de détection s_{pd2}(t) qui est représentatif de la position du miroir de contrôle 41ₖ en cours de rotation.

Puis, un comparateur 62 détecte l'instant où le signal de détection s_{pd2}(t) atteint la valeur seuil s_{pd,th} correspondant à l'alignement optique du faisceau laser de contrôle F_{c} entre les trajets aller et retour. Il fournit alors le signal de pompage sₚ(t) à un circuit monostable 63 puis à un amplificateur de commande 64. Le front de montée du signal de pompage sₚ(t) provoque le basculement du circuit monostable 63 dans un état logique qui évite la transmission à l'amplificateur 64 de nouveaux signaux de déclenchement non voulus. Cela permet de s'assurer qu'une seule commande de pompage est communiquée pendant une période laser.

Le signal de pompage sₚ(t) est reçu par l'amplificateur régénératif 13.2 en avance de phase, de sorte que le gain est maximal lorsque l'impulsion laser est reçue. Pour cela, la position de la photodiode 4Q 61 sur le chemin optique du faisceau laser de contrôle F_{c} est prédéfinie pour recevoir le spot laser du faisceau de contrôle F_{c} avant la photodiode 4Q 33 (ici 3 µs environ plus tôt).

Le fonctionnement du système laser 1 est maintenant décrit en référence à la fig.6.

On considère ici que le système laser 1 distribue successivement le faisceau laser de puissance F_{L} suivant 30 directions de renvoi {D_{r,i}}, au moyen de 30 miroirs de renvoi {21ⱼ}, à la fréquence de balayage f_{sq} de 5 Hz, avec une fréquence de renvoi fᵣ de 150 Hz. Le dispositif d'asservissement comporte également 30 miroirs de contrôle {41ₖ}, lesquels sont tous couplés au même miroir fixe 43ₗ. On rappelle que l'on considère ici que la cadence laser f_{L} est égale à la fréquence de renvoi fᵣ, de sorte qu'une seule impulsion laser de puissance est réfléchie pour chaque direction de renvoi D_{r,i}.

La source laser d'injection 11 émet le faisceau laser d'injection F₀, de fréquence de répétition f₀, par exemple à 80 MHz, et de puissance P₀. Le faisceau laser d'injection F₀ est reçu par le sélecteur d'impulsion 12.1, 12.2. Celui-ci est formé d'un modulateur électro-optique de polarisation 12.1 (cellule de Pockels) suivi d'un prisme séparateur de polarisation 12.2. Le modulateur de polarisation 12.1 fonctionne comme une lame demi-onde commandable en tension : en réponse au signal de déclenchement s_{d}(t), il bascule la polarisation de la lumière (qui reste rectiligne) de 90°.

Notons ici que, du fait de la puissance élevée du faisceau laser F_{L}, une partie de la propagation des faisceaux laser s'effectue dans une enceinte placée sous vide secondaire. L'enceinte sous vide n'est pas représentée sur la figure, par souci de clarté. Elle est délimitée par les hublots 3. Elle inclut le compresseur temporel d'impulsions 13.3, le dispositif de renvoi 20 et le dispositif de contrôle 40.

En l'absence du signal de déclenchement s_{d}(t) à l'entrée du modulateur de polarisation 12.1, la polarisation du faisceau laser F₀ reste inchangée. Après transmission par le modulateur de polarisation 12.1, le faisceau laser F₀ est réfléchi par le séparateur de polarisation 12.2. Le faisceau laser transmis forme donc le faisceau laser de contrôle F_{c}. Il se propage en direction de la lame séparatrice de contrôle 46, traverse le hublot 3 pour pénétrer dans l'enceinte à vide. Le hublot 3 peut être traité par un dépôt antireflet à la longueur d'onde du laser ou bien orienté à l'incidence dite de Brewster (55,5° pour un hublot en silice à la longueur d'onde de 800 nm (Ti-Sa)) pour la polarisation du laser, comme représenté en Fig. 6. Puis, celui-ci est réfléchi par le réflecteur 5 qui le transmet suivant l'axe optique Δ_{c} sur le miroir de contrôle 41ₖ.

Le faisceau laser de contrôle F_{c} est réfléchi par le miroir de contrôle 41ₖ en cours de rotation, le miroir fixe 43ₗ, puis à nouveau par le miroir de contrôle 41ₖ en cours de rotation, puis est finalement détecté par la photodiode 4Q 33 ainsi que par un autre photodétecteur matriciel 61, ici également une photodiode 4Q. La photodiode 4Q 33 délivre un signal de détection s_{pd}(t) dont la valeur est fonction de la position du miroir de contrôle 41ₖ en cours de rotation.

Lorsque la position du miroir de contrôle 41ₖ atteint la position seuil, il y a un alignement optique entre l'axe optique incident Δ_{c} et la direction seuil de retour D_{r,th}. Le signal de détection s_{pd}(t) atteint alors la valeur seuil s_{pd,th}, laquelle est détectée par le circuit électronique inhibiteur 50 qui délivre le signal de déclenchement s_{d}(t).

Dans cet exemple, un générateur de retard programmable 55 est utilisé pour ajuster le retard entre les signaux électriques et resynchroniser le signal de déclenchement s_{d}(t) aux impulsions laser générées par la source laser d'injection 11 (oscillateur local), avant de le communiquer à l'amplificateur 12.3 dont la sortie est raccordée au modulateur 12.1. Un tel générateur de retard 55 peut être un élément commercial (par ex. le générateur DG535 de Stanford Research Systems, Inc.) ou bien un composant programmé de type CPLD (pour *Complex Programmable Logic Devices,* en anglais) ou FPGA (pour *Field Programmable Gate Array,* en anglais). Le générateur de retard 55 reçoit à l'entrée T₀ le signal de déclenchement s_{d}(t), puis le délivre à la sortie A avec un retard prédéfini vis-à-vis de l'entrée T₀. Ce retard temporel peut être ajusté lors de l'étalonnage de la chaîne optoélectronique (par exemple à l'aide d'un oscilloscope). Un exemple de la phase préalable d'étalonnage est détaillé plus loin.

Par ailleurs, la sortie B du générateur de retard 55 délivre une autre impulsion électrique servant à activer la porte logique située dans l'amplificateur régénératif 13.2 pour y faire entrer l'impulsion laser transmise par le sélecteur d'impulsion 12.1, 12.2. Le retard temporel A - B peut être de l'ordre de quelques nanosecondes. Enfin, la sortie C délivre une autre impulsion électrique servant à activer à nouveau la porte logique située dans l'amplificateur régénératif 13.2 pour faire sortir l'impulsion laser une fois amplifiée. Le retard temporel B-C peut être de l'ordre de 50-100 ns.

Lorsque le modulateur de polarisation 12.1 reçoit le signal de déclenchement s_{d}(t), il bascule de 90° la polarisation rectiligne de la lumière incidente, de sorte qu'elle est alors transmise (et non pas réfléchie) par le séparateur de polarisation 12.2. Elle est alors transmise en direction de l'amplificateur optique ici de type CPA formé des éléments 13.1, 13.2, 13.3. Elle est ainsi étirée dans le domaine temporel par l'étireur temporel d'impulsions 13.1, amplifiée dans l'amplificateur régénératif 13.2, et enfin comprimée dans le domaine temporel par le compresseur temporel d'impulsions 13.3. Notons que le compresseur temporel d'impulsions 13.3 est placé dans l'enceinte sous vide. Le faisceau laser ainsi amplifié F_{L} est ensuite dirigé suivant l'axe optique Δᵣ sur le miroir de renvoi 21ⱼ. Celui-ci occupe alors la position référence P_{mr,ref,i} de sorte qu'il est réfléchi suivant la direction de renvoi D_{r,i} associée. Le pointé angulaire peut alors être précis (de l'ordre de quelques dizaines de microradians). De plus, le taux d'erreur dans la transmission des impulsions peut être très réduit (10⁻³ ou moins) compte-tenu du réglage de la phase temporelle par le générateur de retard 55. La garantie d'un faible taux d'erreur est un critère de performance important du système laser 1 à commutation de faisceau laser de puissance dans un objectif de reconstruction d'images par tomographie 3D.

Notons ici que si la source laser d'injection 11 et l'amplificateur régénératif 13.2 sont basés sur la technologie Ti-Sa, laquelle est caractérisée par des énergies par impulsions élevées (de l'ordre du Joule), la cadence laser f_{L} et la fréquence de renvoi fᵣ sont de préférence de l'ordre de 100 à 150 Hz, et les miroirs de renvoi {21ⱼ} sont de préférence en rotation à une vitesse angulaire comprise entre 3.3 et 5 tours/s pour 30 miroirs de renvoi. En revanche, si la technologie Yb est utilisée, laquelle est caractérisée par des énergies par impulsion plus réduites (mJ) mais une cadence de répétition plus importantes (> kHz), la cadence laser f_{L} et la fréquence de renvoi fᵣ peuvent atteindre une cadence laser f_{L} de l'ordre de quelques kilohertz, et les 30 miroirs de renvoi peuvent être mis en rotation à une vitesse de rotation atteignant quelques dizaines de tours/s à 200 tours/s environ (12 000 tr/min). A titre de comparaison, les pompes turbo-moléculaires tournent à des vitesses de rotation comprises entre 30 000 et 70 000 tr/min. Ceci est envisageable avec la technologie laser Yb car les miroirs sont alors de plus petite dimension (et donc de moindre inertie) que pour les faisceaux issus de laser Ti-Sa.

Les réglages s'effectuent en atmosphère via des accès pratiqués à au moins deux endroits de l'enceinte, d'une part au niveau du sol et d'autre part, en partie supérieure de portique. La procédure de réglage s'effectue en statique (moteur à l'arrêt) mais le laser fonctionne malgré tout grâce au circuit électronique inhibiteur 51, ce qui permet de réaliser les réglages en fonctionnement laser optimal.

Le dispositif mécanique en rotation 22 est alors débrayé de la commande moteur puis bloqué en position pour chacune des orientations angulaires correspondant à chacune des visées sur cible (directions de renvoi). La source laser d'injection 11 (oscillateur local) est alors mis en fonctionnement, de même que l'amplificateur optique 13, à puissance réduite.

Pour la position angulaire en cours, la collection du faisceau laser de puissance F_{L} par les cibles est alors assurée en ajustant la normale des miroirs {21ⱼ} grâce aux montures 3-points et par des éléments de positionnement conventionnels (platine de déplacements à vis micrométriques). Ensuite, on procède de même avec les miroirs de déclenchement {41ₖ} et le ou les miroirs fixes {43i}. On réitère cette opération pour toutes les cibles (directions de renvoi). Puis, une fois l'enceinte refermée et le pompage effectué, le dispositif mécanique 22 est mis en mouvement par le moteur à la cadence prescrite pour un fonctionnement optimal du système laser 1.

On observe alors les sorties des différents signaux à l'aide d'un oscilloscope rapide *(High Definition Oscilloscope* - *HDO*) et on procède au réglage des durées temporelles de retard sur le générateur de retard 55 afin, d'une part, de symétriser le signal de déclenchement s_{d}(t) de l'impulsion laser sur le signal laser observé en sortie de chaîne CPA 13 (dans l'objectif de minimiser le taux d'erreur dans la génération d'impulsions) et optimiser l'amplification dans l'amplificateur régénératif 13.2.

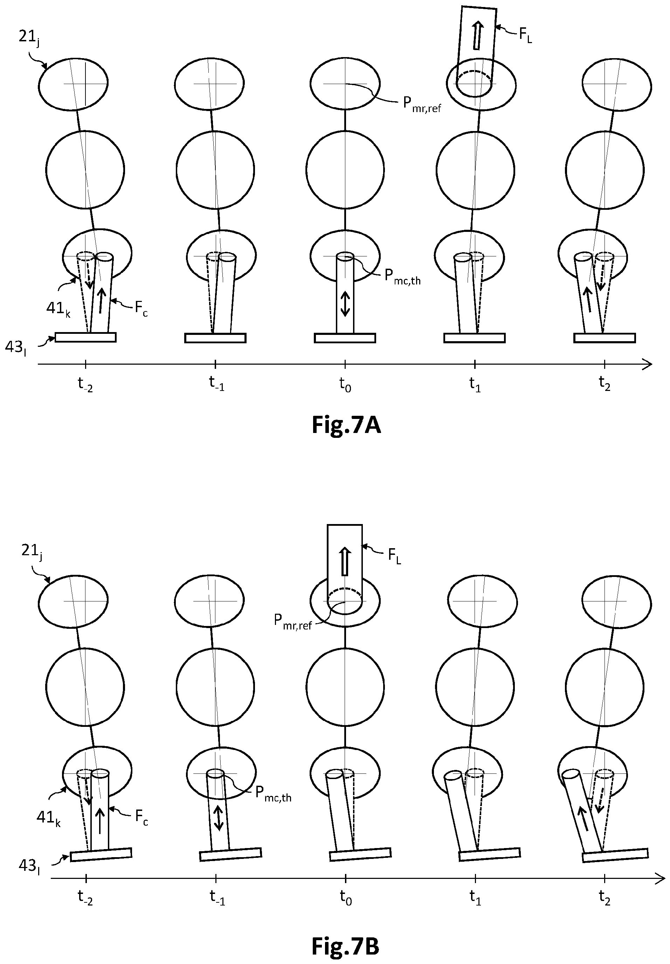

Les figures 7A et 7B sont des vues schématiques et partielles, d'un miroir de renvoi 21ⱼ et d'un miroir de contrôle 41ₖ en rotation autour d'un même axe de rotation, selon un mode de réalisation similaire à celui de la fig.2B. Les miroirs sont en rotation suivant le sens horaire autour d'un même axe de rotation. Ces figures illustrent plusieurs instants successifs de rotation. Dans le cas de la fig.7A, le goniomètre (non représenté) sur lequel est fixé le miroir fixe 43ₗ n'est pas ajusté de manière à compenser le retard temporel d'ordre électronique. En revanche, c'est le cas sur la fig.7B.

En effet, un retard temporel Δtᵣ existe entre l'instant t₀ où le faisceau laser de contrôle F_{c} est reçu par le miroir de contrôle 41ₖ (alors que celui-ci occupe la position seuil P_{mc,th}) puis par le photodétecteur matriciel 33, et l'instant t₁ de la transmission d'une impulsion laser par le sélecteur d'impulsion et de sa réflexion par le miroir de renvoi 21ⱼ (alors qu'il occupe la position référence P_{mr,ref}). Ce délai Δtᵣ provient essentiellement des temps de réponse du circuit électronique du photodétecteur matriciel 33, du circuit électronique de déclenchement 50, et du circuit électronique de contrôle du sélecteur d'impulsion 12.

Ainsi, lors de ce retard temporel Δtᵣ, la position du miroir de renvoi 21ⱼ en rotation passe de la position P_{mr,j}(t₀) à la position P_{mr,j}(t₁=t₀+Δtᵣ). Dans le cas d'un déplacement rotatif à la vitesse angulaire ω_{sq} de 2π×f_{sq} avec f_{sq} = 5 Hz, celle-ci est égale à 31 radis environ. L'écart angulaire entre les positions P_{mr,j}(t₀) et P_{mr,j}(t₁), pour un retard temporel Δtᵣ de 30 ns par exemple, est de l'ordre de 0,9 µrad, ce qui peut encore respecter la condition de précision angulaire de renvoi Δθᵣ, par exemple ici de une à quelques dizaines de microradians. Autrement dit, les positions P_{mr,j}(t₀) et P_{mr,j}(t₁) appartiennent encore à la position référence P_{mr,ref} et garantissent que l'impulsion laser est réfléchie par le miroir de renvoi 21ⱼ suivant la direction de renvoi D_{r,i} avec la précision souhaitée. Une autre manière de présenter la situation est de calculer que le décalage angulaire du miroir de renvoi 21ⱼ, lequel est en rotation à 31 rad/s, entre deux impulsions laser successives à la fréquence de répétition f₀ de 80 MHz, est égal à 0,39 µrad (31rad/s / 80MHz). Pour une condition de précision angulaire de renvoi Δθᵣ à 10 µrad, il ressort que 25 impulsions laser successives (10/0.39) sont compatibles avec cette condition. A une telle cadence, il n'est donc pas nécessaire d'imposer une avance de phase mécanique comme décrit antérieurement (en page 13).

Ainsi, en référence à la fig.7A, le miroir fixe 43ᵢ est orthogonal à l'axe vertical. Avant l'instant t₀, le faisceau laser de contrôle F_{c} est reçu par le miroir de contrôle 41ₖ (trait en pointillé) en direction du miroir fixe 43ₗ suivant une première direction, puis est réfléchi par celui-ci (trait continu) en direction du miroir 41ₖ suivant une autre direction. L'alignement optique du faisceau laser de contrôle F_{c} en la position seuil P_{mc,th} est obtenu à l'instant t₀. Le miroir de renvoi 21ⱼ est situé à la verticale du miroir de contrôle 41ₖ et du miroir fixe 43ₗ. Cependant, c'est à l'instant t₁ qu'il reçoit l'impulsion laser pour la réfléchir suivant une direction de renvoi. La position référence P_{mr,ref} est alors passée. La condition sur la précision spatiale de renvoi peut toutefois être encore vérifiée, en fonction de la fréquence de renvoi fᵣ et donc de la cadence laser f_{L}.

Dans certains cas, ce retard temporel Δtᵣ peut conduire à ne plus respecter la condition voulue sur la précision spatiale de renvoi ΔDᵣ, (ou la précision angulaire de renvoi Δθᵣ) en particulier lorsque la cadence laser f_{L} est plus élevée, comme c'est le cas par exemple pour f_{L} égale à 6kHz. La vitesse angulaire ω_{sq} est de 2π×200 Hz, soit égale à 1250 radis environ. L'écart angulaire entre les positions P_{mr,j}(t₀) et P_{mr,j}(t₁), pour un retard temporel Δtᵣ de 30 ns par exemple, est alors de l'ordre de 37 µrad, ce qui est ici supérieur à la précision angulaire de renvoi Δθᵣ souhaitée de 10 µrad.

Dans ce cas, la position seuil P_{mc,th} du miroir de contrôles 41ₖ est adaptée par un réglage du goniomètre (ou d'une monture Gimbal) pour compenser ce retard temporel. Plus précisément, la position seuil P_{mc,th} du miroir de contrôle 41ₖ est configurée pour être atteinte par le faisceau laser de contrôle à l'instant t₀ : P_{mc,k}(t₀) = P_{mc,th}, de sorte que la position P_{mr,j}(t₁) du miroir de renvoi 21ⱼ corresponde à la position référence P_{mr,ref}. Autrement dit, le miroir de contrôle 41ₖ atteint sa position seuil P_{mc,th} en avance de phase, avant que le miroir de renvoi 21ⱼ n'atteigne sa position référence P_{mr,ref}. Cette avance de phase du miroir de contrôle 41ₖ vis-à-vis du miroir de renvoi 21ⱼ permet de compenser le retard temporel Δtᵣ, de sorte que le faisceau laser de puissance F_{L} est réfléchi par le miroir de renvoi 21ⱼ (qui occupe effectivement la position référence P_{mr,ref,i}) suivant la direction de renvoi D_{r,i} avec la précision angulaire de renvoi Δθᵣ voulue, alors même que la fréquence de renvoi fᵣ et donc la cadence laser f_{L} peuvent être élevées.

Ainsi, en référence à la fig.7B, le miroir fixe 43ᵢ est incliné par rapport à l'axe vertical, du fait d'un réglage du goniomètre (non représenté). Le décalage temporel correspond ici à t₀ - t₋₁. Pour une fréquence de renvoi fᵣ de 6kHz (correspondant à une rotation de 1250 rad/s), une inclinaison du miroir fixe de 37 µrad, suivant le sens antihoraire, entre la normale à la surface réfléchissante et l'axe vertical, permet d'obtenir une avance de phase de 30 ns. Cette inclinaison correspond à un décalage de 30 µm sur un rayon goniométrique de 80 cm. Notons que ce décalage peut être préréglé mécaniquement, par exemple au moyen d'une vis micrométrique, ou ajustable en temps réel, par exemple au moyen d'un actionneur piézoélectrique. Aussi, le faisceau laser de contrôle F_{c} est reçu par le miroir de contrôle 41ₖ en la position seuil P_{mc,th} à l'instant t₋₁, et le faisceau laser de puissance F_{L} est ensuite reçu par le miroir de renvoi 21ⱼ à l'instant t₀ alors qu'il occupe précisément la position référence P_{mr,ref} (ici située à la verticale du miroir de contrôle 41ₖ). La précision spatiale de renvoi est alors particulièrement élevée, alors même que la fréquence de renvoi fᵣ et donc la cadence laser f_{L} sont importantes.

Notons ici que le système laser 1 peut également être utilisé avec une fréquence de renvoi fᵣ et donc une cadence laser f_{L} variable. Pour cela, on peut ajuster l'avance de phase du déclenchement du sélecteur d'impulsion 12 au moyen d'un préréglage du support goniométrique, laquelle peut être éventuellement ajustée par un retard appliqué par le générateur de retard programmable 55. On tire ainsi profit du fait que le dispositif de renvoi 20 présente un caractère 'maître' et que le dispositif laser de puissance 10 présente un caractère 'esclave' du fait du dispositif d'asservissement 30.

Ainsi, on détermine tout d'abord l'angle goniométrique δ permettant de générer une avance temporelle Δt_{g} pour compenser le retard temporel Δtᵣ d'origine optique et électronique : δ = ωₙₒₘ × Δt_{g}, où ωₙₒₘ est la vitesse angulaire nominale à laquelle l'angle goniométrique δ a été préréglé. On peut alors programmer dans le générateur 55 un retard à appliquer Δtₛᵤₚ qui est fonction de la vitesse angulaire effective ω_{eff} à mesurer, par la relation suivante : Δtₛᵤₚ = Δt_{g} + δ×(1/ω_{eff} - 1/ωₙₒₘ). Ainsi, il est possible de compenser le retard temporel Δtᵣ, alors même que la vitesse angulaire effective est différente de la vitesse angulaire nominale qui a servi à régler l'angle goniométrique δ.

La figure 8 est une vue schématique et partielle d'un système laser 1 selon une variante de réalisation, qui se distingue de celui de la fig.6 essentiellement en ce que, d'une part, le faisceau laser de contrôle F_{c} est émis par une source laser de contrôle 31 distincte de la source laser d'injection 11, et d'autre part, le dispositif de contrôle 40 comporte un encodeur rotatif 46 solidaire du support rotatif 23. Notons que la source laser de contrôle 31 peut évidemment être utilisée dans le cadre des variantes des fig.2A, 2B, 3A et 3B. La fig.8 comprend également une vue de face de l'encodeur rotatif 46, situé ici sur la face amont du support rotatif 23.

La source laser de contrôle 31 est adaptée à émettre le faisceau laser de contrôle F_{c}, lequel ne provient donc pas de la source laser d'injection 11 (oscillateur local). Il est transmis en direction du dispositif de contrôle 40, et ici traverse une lame semi-réfléchissante 4, une lentille de focalisation, et un hublot 3 (orienté ici à l'incidence de Brewster de 55°). Le faisceau laser F_{c} est de préférence un faisceau continu.

Le dispositif de contrôle 40 comporte un encodeur rotatif 46, ici un encodeur optique, assemblé au support rotatif 23 du dispositif de renvoi 20, de sorte que l'encodeur 46 est en rotation lorsque le support 23 est en rotation. Dans cet exemple, le dispositif de renvoi 20 est identique ou similaire à celui des fig.2A et 2B, et l'encodeur rotatif 46 est situé sur la face amont du support rotatif 23.

L'encodeur rotatif 46 est formé d'une surface réfléchissante 46.1, réfléchissante à la longueur d'onde du faisceau laser de contrôle F_{c}, et qui s'étend suivant la circonférence de la face amont du support rotatif 23. Des zones non réfléchissantes 46.2, ici des trous, sont régulièrement distribuées le long de la surface réfléchissante 46.1, suivant la circonférence de de la face amont du support rotatif 23, à raison de 1 trou 46.2 pour 1 direction de renvoi D_{r,i}. Chaque trou 46.2 est séparé des trous voisins par la surface réfléchissante 46.1. Les trous 46.2 sont positionnés suivant une ligne circonférentielle qui est parcourue par le faisceau laser F_{c} au fur et à mesure de la rotation du support 23. A titre d'exemple, les trous 46.2 peuvent présenter un diamètre de 50 à 100 µm pour un spot laser du faisceau laser F_{c} d'un diamètre de 30 µm environ. Les zones non réfléchissantes 46.2 peuvent être des trous ou des traits. Les trous 46.2 peuvent présenter un diamètre de 50 µm à 100 µm, voire plus. Les traits peuvent présenter une largeur du même ordre. Un déclenchement par une succession de traits est probablement plus fiable que par une succession de trous (indépendance vs déplacement axial du dispositif).

En fonctionnement, le faisceau laser F_{c} est réfléchi par la surface réfléchissante 46.2 de l'encodeur rotatif 46, puis est renvoyée vers une photodiode 33 (par exemple de type PIN). Le courant électrique généré par la photodiode 33 est ici transformé en tension électrique par un circuit transimpédance 56.

Lorsqu'un trou 46.2 arrive en correspondance avec le faisceau laser F_{c}, celui-ci n'est plus réfléchi, et la puissance optique reçue par la photodiode 33 diminue fortement, passant alors sous un seuil prédéfini. Le signal électrique, appelé ici s_{c}(t), est ici reformaté en logique positive par un amplificateur inverseur 57 : il correspond alors à un front montant (*leading edge,* en anglais).

Ce signal électrique s_{c}(t) est ici communiqué à l'entrée de déclenchement du circuit de pompage du laser pour régénérer le gain de l'amplificateur régénératif 13.2. En parallèle, ce même signal électrique s_{c}(t) est communiqué à un générateur de retard 58 qui impose un délai temporel prédéfini, par exemple de l'ordre de 3 µs pour un laser Ti-Sa, le temps que l'inversion de population soit effective.

Passé ce délai, le signal électrique s_{c}(t) apparaît donc en entrée d'une cellule logique ET pour armer la synchronisation. La première impulsion laser générée par la source laser d'injection 11 est détectée par une deuxième photodiode 59, ce qui fait alors basculer la sortie logique de la cellule ET (ici à 1) et déclenche l'émission du signal de déclenchement s_{d}(t), et donc le prélèvement de l'impulsion laser selon le chronogramme adapté au circuit électronique (prenant en compte les délais temporels de propagation optique et électronique), comme décrit sur la fig.5B. Les impulsions laser suivantes sont bloquées par le circuit électronique inhibiteur 51. Enfin, le signal de déclenchement s_{d}(t) est décalé à nouveau par le générateur de retard 55, pour ouvrir la cellule d'amplification de l'amplificateur régénératif 13.2, comme décrit précédemment.

Ce montage optoélectronique permet donc une sélection sans altération d'une impulsion laser émise par la source laser d'injection 11 lorsque l'encodeur rotatif 46 est dans la position angulaire adaptée à un renvoi du faisceau laser de puissance F_{L} suivant la direction de renvoi D_{r,i} voulue. Dans cet exemple, la source laser 31 est placée à l'extérieur de l'enceinte sous vide pour faciliter son réglage et son entretien, ainsi que sa thermalisation.

Des modes de réalisation particuliers viennent d'être décrits. Différentes variantes et modifications apparaîtront à l'homme du métier. Ainsi, un encodeur rotatif 46 de type optique a été décrit, mais des encodeurs de type magnétique peuvent également être utilisés.

## Revendications

1. Système laser (1), adapté à émettre un faisceau laser de puissance F_{L}, impulsionnel, et à le distribuer suivant plusieurs directions de renvoi successives {D_{r,i}}ᵢ₌₁; _{NDr}, avec N_{Dr}>1, comportant :
∘ un dispositif laser de puissance (10), adapté à émettre le faisceau laser de puissance F_{L} à une cadence laser f_{L}, comportant:
• une source laser d'injection (11) adaptée à émettre un faisceau laser impulsionnel d'injection F₀ à une fréquence de répétition f₀ supérieure à la cadence laser f_{L};
∘ un dispositif de renvoi (20), adapté à réfléchir et distribuer le faisceau laser de puissance F_{L} suivant les directions de renvoi successives {D_{r,i}}, comportant :
• au moins un miroir de renvoi {21ⱼ}_{j=1 ;Nmr} avec Nₘᵣ≥1 ;
• un premier dispositif mécanique de positionnement (22), auquel le ou les miroirs de renvoi {21ⱼ} sont assemblés, adapté à déplacer continûment le ou les miroirs de renvoi {21ⱼ} pour le ou les positionner successivement, à une fréquence de renvoi fᵣ, en des positions référence {P_{mr,ref,i}}ᵢ₌₁; _{NDr} associées respectivement aux directions de renvoi {D_{r,i}}, de sorte qu'un miroir de renvoi (21ⱼ) positionné en une position référence (P_{mr,ref,i}) reçoit le faisceau laser de puissance F_{L} et le réfléchit suivant la direction de renvoi (D_{r,i}) correspondante ;
∘ **caractérisé en ce que** le dispositif laser de puissance (10) comporte un sélecteur d'impulsion (12), adapté à recevoir le faisceau laser impulsionnel d'injection F₀ et à le transmettre à la cadence laser f_{L}, le faisceau laser transmis étant destiné à former le faisceau laser de puissance F_{L} ;
∘ et **en ce qu'**il comporte un dispositif d'asservissement (30), adapté à fournir un signal de déclenchement s_{d}(t) au sélecteur d'impulsion (12) autorisant la transmission du faisceau laser de puissance F_{L}, comportant :
• une source laser de contrôle (31), adaptée à émettre un faisceau laser de contrôle F_{c} ;
• un dispositif de contrôle (40), comportant :
▪ au moins un miroir de contrôle {41ₖ}_{k=1; Nmc} avec N_{mc}≥1 ;
▪ un deuxième dispositif mécanique de positionnement (42), auquel le ou les miroirs de contrôle {41ₖ} sont assemblés, adapté à déplacer continûment en rotation le ou les miroirs de contrôle {41ₖ} pour le ou les positionner successivement, à la fréquence de renvoi fᵣ, en au moins une position seuil {P_{mc,th,m}}_{m=1 ;Npth}, avec Nₚₜₕ≥1, de sorte qu'un miroir de contrôle (41ₖ) positionné en une position seuil (P_{mc,th,m}) reçoit le faisceau laser de contrôle F_{c} et le réfléchit suivant une même direction seuil de retour (D_{c,th}) prédéfinie ;
• un photodétecteur matriciel (33), adapté à recevoir le faisceau laser de contrôle F_{c} réfléchi par un miroir de contrôle (41ₖ) en cours de rotation, et à émettre en réponse un signal de détection s_{pd}(t), représentatif du déplacement du miroir de contrôle (41ₖ), passant par une valeur seuil s_{pd,th} associée à la ou les positions seuil {P_{mc,th,m}} ;
• un dispositif électronique de déclenchement (50), adapté à émettre le signal de déclenchement s_{d}(t) lorsque le signal de détection s_{pd}(t) atteint ladite valeur seuil s_{pd,th}, la ou les positions seuil {P_{mc,th,m}} étant prédéfinies de sorte que le faisceau laser de puissance F_{L}, transmis par le sélecteur d'impulsion (12) en réponse au signal de déclenchement s_{d}(t), est reçu par un miroir de renvoi (21ⱼ) alors qu'il occupe une position référence P_{mr,ref.i}, et est donc réfléchi suivant la direction de renvoi (D_{r,i}) correspondante.

2. Système laser (1) selon la revendication 1, dans lequel :
∘ le dispositif laser de puissance (10) comporte une source laser d'injection (11) à blocage de modes passif, adapté à générer le faisceau laser impulsionnel F₀;
∘ le dispositif électronique de déclenchement (50) comporte un circuit électronique inhibiteur d'impulsions multiples (51) adapté à émettre le signal de déclenchement s_{d}(t) lorsque le signal de détection s_{pd}(t) atteint ladite valeur seuil s_{pd,th}, et un générateur de retard (55) adapté à transmettre le signal de déclenchement s_{d}(t) au sélecteur d'impulsion (12), avec un retard prédéfini de sorte que le signal de déclenchement s_{d}(t) est reçu par le sélecteur d'impulsion (12) en phase avec une impulsion laser du faisceau laser impulsionnel F₀ à sélectionner.

3. Système laser (1) selon la revendication 1 ou 2, dans lequel :
∘ le dispositif laser de puissance (10) comporte : un amplificateur optique (13.1, 13.2, 13.3), situé en aval du sélecteur d'impulsion (12), et comprenant un amplificateur régénératif (13.2) pompé de manière impulsionnelle,
∘ le dispositif d'asservissement (30) comporte un circuit optoélectronique d'asservissement du gain (60), adapté à émettre un signal de pompage sₚ(t) autorisant une transmission d'une impulsion de pompage à l'amplificateur régénératif (13.2), de sorte que l'impulsion de pompage est reçue par l'amplificateur régénératif (13.2) en avance de phase à la réception par celle-ci d'une impulsion laser transmise par le sélecteur d'impulsion (12) en réponse au signal de déclenchement s_{d}(t), avec une avance prédéfinie de sorte que l'amplificateur régénératif (13.2) présente un gain optimal lorsqu'il reçoit l'impulsion laser transmise par le sélecteur d'impulsion (12).

4. Système laser (1) selon l'une quelconque des revendications 1 à 3, dans lequel la cadence laser f_{L} est égale à la fréquence de renvoi fᵣ.

5. Système laser (1) selon l'une quelconque des revendications 1 à 4, dans lequel la direction seuil de retour (D_{c,th}) est coaxiale avec un axe optique (Δ_{c}) du faisceau laser de contrôle F_{c} alors incident sur le miroir de contrôle {41ⱼ} et provenant de la source laser de contrôle (31).

6. Système laser (1) selon l'une quelconque des revendications 1 à 5, dans lequel le dispositif de renvoi (20) comporte plusieurs miroirs de renvoi {21ⱼ}, avec Nₘᵣ>1, assemblés à un premier support rotatif (23), lequel est un cylindre à section circulaire ou polygonale, à la surface duquel sont distribués les miroirs de renvoi {21ⱼ}.

7. Système laser (1) selon la revendication 6, dans lequel le dispositif de contrôle (40) comporte un cylindre rotatif (46), présentant une surface externe (46.1) destinée à être éclairée par le faisceau laser de contrôle F_{c}, la surface externe (46.1) étant réfléchissante au faisceau laser de contrôle F_{c} et parcourue par des zones non réfléchissantes (46.2) distribuées de manière régulière le long de la surface externe (46.1).

8. Système laser (1) selon la revendication 6, dans lequel le dispositif de contrôle (40) comporte plusieurs miroirs de contrôle {41ₖ}, avec N_{mc}>1, assemblés à un deuxième support rotatif (42), lequel est un cylindre à section circulaire ou polygonale, à la surface duquel sont distribués les miroirs de contrôle {41ⱼ}.

9. Système laser (1) selon la revendication 8, dans lequel le dispositif de contrôle (40) comporte au moins un miroir fixe {43ₗ}_{l=1 ; Nmf} avec N_{mf}≥1, les miroirs de contrôle {41ₖ} étant couplés optiquement au ou aux miroirs fixes {43ₗ}, de sorte qu'un faisceau laser de contrôle F_{c} est tout d'abord réfléchi par un miroir de contrôle 41ₖ en direction du miroir fixe 43ₗ, lequel le réfléchit en retour vers le même miroir de contrôle 41ₖ.

10. Système laser (1) selon la revendication 9, dans lequel le ou les miroirs fixes {43ₗ} sont fixés à un support de réglage angulaire (44), adapté à modifier une inclinaison angulaire du ou des miroirs fixes {43ₗ} vis-à-vis d'un axe de déplacement du ou des miroirs de contrôle {41ₖ}, de sorte que le faisceau laser de contrôle F_{c} est réfléchi par un miroir de contrôle 41ₖ, lorsqu'il occupe une position seuil P_{mc,th,m}, en avance de phase avec la réflexion du faisceau laser de puissance Fₚ par un miroir de renvoi 21ⱼ alors qu'il occupe une position référence P_{mr,ref,i}.

11. Système laser (1) selon la revendication 9 ou 10, dans lequel les miroirs de contrôle {41ₖ} sont distincts des miroirs de renvoi {21ⱼ}, le dispositif de contrôle (40) comportant un seul miroir fixe {43i} couplé optiquement à chacun des miroirs de contrôle {41ₖ}.

12. Système laser (1) selon la revendication 9 ou 10, dans lequel les miroirs de contrôle {41ₖ} sont confondus avec les miroirs de renvoi {21ⱼ}, les miroirs de renvoi {21ⱼ} formant les miroirs de contrôle {41ₖ}, le faisceau laser de puissance F_{L} étant incident sur les miroirs de renvoi {21ⱼ} suivant un premier axe optique (Δᵣ), et le faisceau laser de contrôle F_{c} étant incident sur les miroirs de contrôle {41ₖ} suivant un deuxième axe optique (Δ_{c}) distinct du premier axe optique, et dans lequel le dispositif de contrôle (40) comportant plusieurs miroirs fixes {43ₗ}, couplé optiquement respectivement aux miroirs de contrôle {41ₖ}.

13. Système laser (1) selon l'une quelconque des revendications 1 à 12, dans lequel le faisceau laser de puissance F_{L} présente une puissance au moins égale à 10 GW et/ou dans lequel la cadence laser f_{L} est au moins égale à 50 Hz.
